# EUROPEAN PATENT APPLICATION

(11) **EP 3 816 216 A1**
(43) Date of publication of application: **05.05.2021**
(21) Application number: 19814021.2
(22) Date of filing: 27.03.2019
(51) Int. Cl.: C08J 9/08, C08K 5/109, C08L 101/10

(54) **RESIN COMPOSITION FOR FOAM, FOAM, AND PRODUCTION METHOD OF FOAM**

(30) Priority: 07.06.2018 JP 2018109779
(71) Applicant: KANEKA CORPORATION, Osaka 530-8288 (JP)
(72) Inventor: KAMIYAMA, Hiroshi, Takasago-shi, Hyogo 676-8688 (JP)
(74) Representative: Vossius & Partner Patentanwälte Rechtsanwälte mbB
(86) International application number: PCT/JP2019/013407
(87) International publication number: WO 2019/235034

(57) **Abstract**

A resin composition for a foam which can expand at low temperatures within a short period of time even when the resin composition contains no water or the content of water is low, and a foam formed by expanding and curing the resin composition for a foam, as well as a method for producing a foam using the resin composition for a foam are provided. The resin composition for a foam contains a base resin having a reactive silicon group (A), a chemical foaming agent (B), and a silanol condensation catalyst, in which a dicarbonate diester is used as the chemical foaming agent (B). The resin composition for a foam preferably contains an acrylic resin and/or a polyoxyalkylene-based polymer as the base resin (A).

## Description

### TECHNICAL FIELD

The present invention relates to a resin composition for a foam which is suitably used for foam production, a foam formed by expanding and curing the resin composition for a foam, and a method for producing a foam using the resin composition for a foam.

### BACKGROUND ART

Regarding foams of polymer compounds, foams formed from thermoplastic resins such as polystyrene, polyethylene, polypropylene, and polyvinyl chloride are well-known. These foams are utilized in the field of civil engineering, the field of packaging, the field of electric appliances, the field of automobiles, and the like, in the form of e.g. beads, sheets, boards, or the like, by making use of characteristics such as heat insulating properties, lightweightness, and shock-absorbing properties.

Furthermore, regarding foams formed using thermosetting resins, foams formed using modified silicone resins are known. Specifically, a foam obtained by curing, by heat, a liquid resin composition which contains a base resin (A) which is a polymer having a silicon group having a hydrolyzable group, and having the main chain including oxyalkylene-based units, a silanol condensation catalyst (B), and a chemical foaming agent (C) including a bicarbonate salt and the like is known (see Patent Document 1).

Patent Document 1: PCT International Publication No. WO2016/021630

### DISCLOSURE OF THE INVENTION

### Problems to be Solved by the Invention

However, to produce the foam described in Patent Document 1, for example, an elevated temperature of about 100°C and a long time period of about 90 minutes are required, as described in the Examples of Patent Document 1. Thus, the foam described in Patent Document 1 has a problem that it requires a long time period for expansion and curing.

On the other hand, for example, when a foaming agent easily soluble in water, such as sodium hydrogencarbonate and water are used in combination, expansion and curing of the liquid resin composition proceeds in a very short time period. However, in this case, to cause expansion of the liquid resin composition to proceed favorably, the liquid composition is required to contain a somewhat large amount of water. Thus, when sodium hydrogencarbonate or the like is used as a foaming agent, it is difficult for the liquid resin composition to have a composition in which no water or a small amount of water is contained. Furthermore, when a foam is produced using a liquid resin composition that contains a large amount of water to some extent, the foam produced inevitably contains water. In the case where such a foam is produced in a factory with drying equipment or the like, water can be removed from the foam by drying the foam, and no problem will be caused. However, in the case where the foam is formed by applying a liquid resin composition through a process such as casting in a place without drying equipment, for example, an outdoor construction site or the like, moisture cannot be removed from the foam. In the case where a foam containing moisture is applied in a building, the moisture gradually released from the foam may have an adverse effect on the building. In view of such circumstances, there has been a desire for a resin composition for a foam which can expand at low temperatures within a short period of time even when the resin composition contains no water or the content of water therein is low.

The present invention has been made in view of the above-mentioned problems, and an object of the present invention is to provide a resin composition for a foam which can expand at low temperatures within a short period of time even when the resin composition contains no water or the content of water therein is low, and a foam formed by expanding and curing the resin composition for a foam, as well as a method for producing a foam using the resin composition for a foam. Means for Solving the Problems

The inventor of the present invention conducted extensive studies on the problems described above, and as a result, found that the above-mentioned problems can be solved by using a resin composition for a foam which contains a base resin (A) which is an organic polymer having a reactive silicon group, a chemical foaming agent (B), and a silanol condensation catalyst (D), and using a dicarbonate diester as the chemical foaming agent (B), to accomplish the present invention .

That is, the present invention has the following configuration.

A first aspect of the present invention relates to a resin composition for a foam containing a base resin having a reactive silicon group (A), a chemical foaming agent (B), and a silanol condensation catalyst (D), in which
the chemical foaming agent (B) contains a dicarbonate diester (B-1) .

A second aspect of the present invention relates to the resin composition for a foam according to the first aspect, in which the base resin (A) contains an acrylic resin, and/or a polyoxyalkylene-based polymer.

A third aspect of the present invention relates to the resin composition for a foam according to the first or second aspect, in which the reactive silicon group is a group selected from the group consisting of: a trimethoxysilyl group; a (methoxymethyl)dimethoxysilyl group; groups represented by the following formulas (1) to (3): 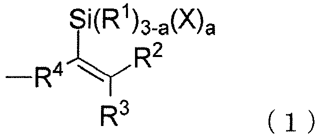 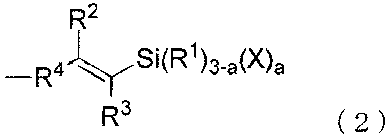 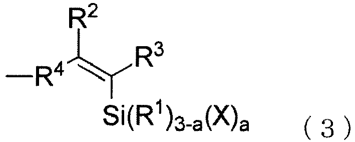 in which in the formulas (1) to (3), R¹ each independently represents a hydrocarbon group having 1 to 20 carbon atoms, in which the hydrocarbon group represented by R¹ is optionally substituted, and optionally has a hetero-containing group; X represents a hydroxy group or a hydrolysable group; a is 1, 2, or 3; R⁴ represents a divalent linking group, in which the two bonds included in R⁴ are each bonded to a carbon atom, an oxygen atom, a nitrogen atom, or a sulfur atom within the linking group; and R² and R³ each independently represent any of a hydrogen atom, an alkyl group having 1 to 20 carbon atoms, an aryl group having 6 to 20 carbon atoms, an aralkyl group having 7 to 20 carbon atoms, or a silyl group;
and a group represented by the following formula (4):

-R⁵-CH₂-Si (R¹) ₃₋ₐ (X) ₐ (4)

in which in the formula (4), R¹ and a are the same as R¹ and a defined in formulas (1) to (3); and R⁵ represents a heteroatom.

A fourth aspect of the present invention relates to the resin composition for a foam according to any one of the first to third aspects, in which the silanol condensation catalyst (D) is a neutral or weakly acidic catalyst.

A fifth aspect of the present invention relates to the resin composition for a foam according to the fourth aspect, in which the silanol condensation catalyst (D) contains a tin-containing catalyst.

A sixth aspect of the present invention relates to the resin composition for a foam according to the fifth aspect, in which the tin-containing catalyst is a neutral or weakly acidic dialkyltin dicarboxylate, and the neutral or weakly acidic dialkyltin dicarboxylate is a compound represented by the following formula (D1), or an oligomer or polymer including a structural unit represented by the following formula (D2):

(R^{d1}) (R^{d2}) (R^{d3}COO) (R^{d9}COO) Sn ··· (D1)

- (- (R^{d1}) (R^{d2}) Sn-OCOR^{d5}COO-) - ··· (D2)

in which in formulas (D1) and (D2), R^{d1} and R^{d2} may be identical to or different from each other, and R^{d1} and R^{d2} each represent a linear or branched alkyl group; R^{d3} and R^{d4} each represent an organic group having 1 to 40 carbon atoms; and R^{d5} represents a divalent organic group having 1 to 40 carbon atoms.

A seventh aspect of the present invention relates to the resin composition for a foam according to any one of the first to sixth aspects, in which the content of the dicarbonate diester (B-1) is 1 part by weight or more and 50 parts by weight or less with respect to 100 parts by weight of the base resin (A).

An eighth aspect of the present invention relates to a foam which is formed by expanding and curing the resin composition for a foam according to any one of the first to seventh aspects.

A ninth aspect of the present invention relates to a method for producing a foam, including: a mixing step of mixing a first liquid which contains a base resin having a reactive silicon group (A) and a dicarbonate diester (B-1) with a silanol condensation catalyst (D) to obtain a mixed liquid,
in which in the mixed liquid, the rate of foaming effected by decomposition of the dicarbonate diester (B-1), and the rate of reaction of the curing of the mixed liquid effected by the reaction between the reactive silicon groups are each adjusted such that a foam having an expansion ratio of 2-fold or more and 60-fold or less is obtained.

A tenth aspect of the present invention relates to the method for producing a foam according to the nineth aspect, in which the amount of the dicarbonate diester (B-1) used is 1 part by weight or more and 50 parts by weight or less with respect to 100 parts by weight of the base resin (A), and the amount of the silanol condensation catalyst (D) used is 0.05 parts by weight or more and 20 parts by weight or less with respect to 100 parts by weight of the base resin (A).

An eleventh aspect of the present invention relates to the method for producing a foam according to the nineth or tenth aspect, in which the base resin (A) contains an acrylic resin, and/or a polyoxyalkylene-based polymer.

A twelfth aspect of the present invention relates to the method for producing a foam according to any one of the ninth to eleventh aspects, in which the reactive silicon group is a group selected from the group consisting of: a trimethoxysilyl group; a (methoxymethyl)dimethoxysilyl group; and groups represented by the following formulas (1) to (3): 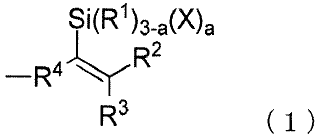 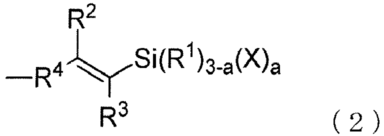 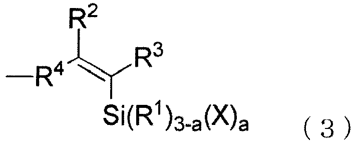 in which in the formulas (1) to (3), R¹ each independently represents a hydrocarbon group having 1 to 20 carbon atoms, in which the hydrocarbon group represented by R¹ is optionally substituted, and optionally has a hetero-containing group; X represents a hydroxy group or a hydrolysable group; a is 1, 2, or 3; R⁴ represents a divalent linking group, in which the two bonds included in R⁴ are each bonded to a carbon atom, an oxygen atom, a nitrogen atom, or a sulfur atom within the linking group; and R² and R³ each independently represent any of a hydrogen atom, an alkyl group having 1 to 20 carbon atoms, an aryl group having 6 to 20 carbon atoms, an aralkyl group having 7 to 20 carbon atoms, or a silyl group; and a group represented by the following formula (4):

-R⁵-CH₂-Si (R¹) ₃₋ₐ (X) ₐ (4)

in which in the formula (4), R¹ and a are the same as R¹ and a defined in formulas (1) to (3); and R⁵ represents a heteroatom.

A thirteenth aspect of the present invention relates to the method for producing a foam according to any one of the ninth to twelfth aspects, in which the silanol condensation catalyst (D) is a neutral or weakly acidic catalyst.

A fourteenth aspect of the present invention relates to the method for producing a foam according to the thirteenth aspect, in which the silanol condensation catalyst (D) contains a tin-containing catalyst.

A fifteenth aspect of the present invention relates to the method for producing a foam according to the fourteenth aspect, in which the tin-containing catalyst is a neutral or weakly acidic dialkyltin dicarboxylate, and the neutral or weakly acidic dialkyltin dicarboxylate is a compound represented by the following formula (D1), or an oligomer or polymer including a structural unit represented by the following formula (D2):

(R^{d1}) (R^{d2}) (R^{d3}COO) (R^{d4}COO) Sn · · · (D1)

- (- (R^{d1}) (R^{d2}) Sn-OCOR^{d5}COO-) - · · · (D2)

in which in formulas (D1) and (D2), R^{d1} and R^{d2} may be identical to or different from each other, and R^{d1} and R^{d2} each represent a linear or branched alkyl group; R^{d3} and R^{d4} each represent an organic group having 1 to 40 carbon atoms; and R^{d5} represents a divalent organic group having 1 to 40 carbon atoms.

### Effects of the Invention

According to the aspects of the present invention, a resin composition for a foam which can expand at low temperatures within a short period of time even when the resin composition contains no water or the content of water therein is low, and a foam formed by expanding and curing the resin composition for a foam, as well as a method for producing a foam using the resin composition for a foam can be provided.

### PREFERRED MODE FOR CARRYING OUT THE INVENTION

### <<Resin Composition for Foam»

A resin composition for a foam is suitably used for the production of foams. The resin composition for a foam contains a base resin having a reactive silicon group (A), a chemical foaming agent (B), and a silanol condensation catalyst (D). The resin composition for a foam contains a dicarbonate diester (B-1) as the chemical foaming agent (B). Hereinafter, essential or optional components contained in the resin composition for a foam will be described in detail.

### <Base Resin (A)>

The base resin (A) is a curable component having a reactive silicon group. The base resin (A) preferably has at least one reactive silicon group in the molecular chain. Since the base resin (A) has the reactive silicon group, the base resin (A) is crosslinked to a polymeric state through occurrence of a silanol condensation reaction between the reactive silicon groups, and thereby cured. The number of reactive silicon groups included in the base resin (A) is preferably at least one per molecular chain from the viewpoint of condensation reactivity. From the viewpoint of curability and flexibility, the base resin (A) is preferably a polymer having the reactive silicon group at both ends of the main chain or branched molecular chain. Such a polymer has preferably 1.0 or more and 3.0 or less, more preferably 1.1 or more and 2.5 or less, and particularly preferably 1.2 or more and 2.0 or less reactive silicon groups per molecule. Meanwhile, the curing reaction of the base resin (A) through the reaction between the reactive silicon groups can proceed sufficiently using only the moisture in air and the material. Therefore, even in the case where the resin composition for a foam contains no water (C) or the content of water (C) is extremely small, no particular trouble will be caused in terms of progression of the curing of the resin composition for a foam.

When the base resin (A) composed of only the polymer having the reactive silicon group at both ends of the main chain or branched molecular chain, an acetone gel fraction of the obtained foam tends to be higher. The higher acetone gel fraction means higher organic solvent resistance of the foam. In the case where the acetone gel fraction of the foam is higher, for example, when the foam is applied to various buildings or attached to various instruments using an adhesive containing an organic solvent, deterioration of the foam by the solvent (elution of a solvent-soluble fraction) is less likely to occur.

Furthermore, the base resin (A) may contain a polymer having the reactive silicon group only at one end of the molecular chain, along with the polymer having the reactive silicon group at both ends of the main chain or branched molecular chain. The polymer having the reactive silicon group only at one end of the molecular chain has, on average, preferably 1.0 or less, more preferably 0.3 or more and 1.0 or less, even more preferably 0.4 or more and 1.0 or less, and particularly preferably 0.5 or more and 1.0 or less reactive silicon groups per molecule. The content of the polymer having the reactive silicon group at both ends of the molecular chain is preferably 65 parts by weight or more and 95 parts by weight or less in 100 parts by weight of the base resin (A). The content of the polymer having the reactive silicon group only at one end of the molecular chain is preferably 5 parts by weight or more and 35 parts by weight or less in 100 parts by weight of the base resin (A).

The reactive silicon group contained in the base resin (A) is a group having a hydroxy group or a hydrolyzable group that is bonded to the silicon atom, and capable of being crosslinked by forming a siloxane bond through a reaction accelerated by the silanol condensation catalyst. The reactive silicon group is exemplified by a group represented by formula (1a) :

-Si (R^{1a}) ₃₋ₐ (X) ₐ (1a)

in which R^{1a} each independently represents a hydrocarbon group having 1 to 20 carbon atoms, or a triorganosiloxy group represented by -OSi(R')₃, in which R' each independently represents a hydrocarbon group having 1 to 20 carbon atoms, the hydrocarbon group represented by R^{1a} is optionally substituted, and optionally has a hetero-containing group, and furthermore, X each independently represents a hydroxy group or a hydrolyzable group, and
further, a is an integer of 1 or more and 3 or less.

The hydrolyzable group is not particularly limited, and may be any conventionally known hydrolyzable group. Specific examples include a hydrogen atom, a halogen atom, an alkoxy group, an acyloxy group, a ketoximate group, an amino group, an amide group, an acid amide group, an aminooxy group, a mercapto group, and an alkenyloxy group. Among these, a hydrogen atom, an alkoxy group, an acyloxy group, a ketoximate group, an amino group, an amide group, an aminooxy group, a mercapto group, and an alkenyloxy group are preferred, and an alkoxy group is particularly preferred from the viewpoint of being mildly hydrolyzable and easy to handle.

One to three hydrolyzable groups or hydroxy groups can be bonded to one silicon atom. In the case where two or more hydrolyzable groups or hydroxy groups are bonded in the reactive silicon group, they may be identical to or different from one another.

In the above formula (1a), a is preferably 2 or 3, and 3 is more preferred from the viewpoint of the curability and that the curing and the expansion proceed simultaneously.

Furthermore, specific examples of R^{1a} in the above formula (1a) include: an alkyl group such as a methyl group or an ethyl group; a cycloalkyl group such as a cyclohexyl group; a aryl group such as a phenyl group; an aralkyl group such as a benzyl group; a triorganosiloxy group represented by -OSi(R')₃, in which R' represents a methyl group, a phenyl group or the like; a chloromethyl group; a methoxymethyl group. Among these, a methyl group and a methoxymethyl group are particularly preferred.

More specific examples of the reactive silicon group represented by the above formula (1a) include a trimethoxysilyl group, a triethoxysilyl group, a triisopropoxysilyl group, a dimethoxymethylsilyl group, a diethoxymethylsilyl group, a diisopropoxymethylsilyl group, and (methoxymethyl)dimethoxysilyl group. From the viewpoint of high activity and satisfactory curability, a trimethoxysilyl group, a triethoxysilyl group, and a dimethoxymethylsilyl group are preferred, and a trimethoxysilyl group is more preferred.

The structure of the base resin (A) may be a linear structure or a branched structure, but a branched structure is preferred from the viewpoint of curability.

From the viewpoint of the balance between viscosity and reactivity, the molecular weight of the base resin (A) is preferably 1,500 or more, and more preferably 3,000 or more as the number average molecular weight Mn. The upper limit of the number average molecular weight Mn is not particularly limited, but is preferably 50,000 or less, more preferably 30,000 or less, and even more preferably 30,000 or less. Furthermore, the base resin (A) may be a combination of two or more types. In such a case, a polymer other than the polymer used as a main component may not satisfy the above-described conditions, as long as the intended purpose is adjustment of the viscosity and the crosslinked structure.

The reactive silicon group that is located at a terminal of the base resin (A) can be introduced by terminally-modifying a hydroxy group-terminated oxyalkylene with an isocyanatosilane compound. As another method, the reactive silicon group can be introduced into the terminal of the base resin (A) by introducing a group having a carbon-carbon unsaturated bond, such as an allyl group, into a hydroxy group terminal, and then performing hydrosilylation using an alkoxysilane. Furthermore, in the case where a terminal of a polyisocyanate-modified product is an isocyanate group, the reactive silicon group can be introduced into the terminal of the base resin (A) by terminal modification with an aminosilane having an active hydrogen, or the like.

From the viewpoint of the ease in producing a foam having a high expansion ratio, the reactive silicon group or the terminal group including the reactive silicon group in the base resin (A), as described in the foregoing, is preferably: a trimethoxysilyl group; a (methoxymethyl)dimethoxysilyl group; and groups represented by the following formulas (1) to (3) : 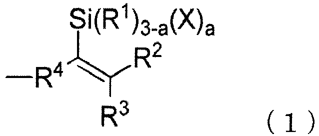 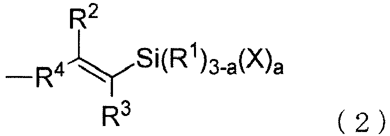 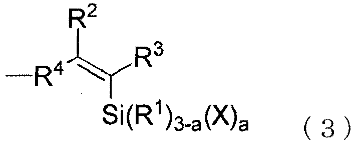 in which in formulas (1) to (3), R¹ each independently represents a hydrocarbon group having 1 to 20 carbon atoms, in which the hydrocarbon group represented by R¹ is optionally substituted, and optionally has a hetero-containing group; X represents a hydroxy group or a hydrolysable group; a is 1, 2, or 3; R⁴ represents a divalent linking group, in which the two bonds included in R⁴ are each bonded to a carbon atom, an oxygen atom, a nitrogen atom, or a sulfur atom within the linking group; and R² and R³ each independently represent any of a hydrogen atom, an alkyl group having 1 to 20 carbon atoms, an aryl group having 6 to 20 carbon atoms, an aralkyl group having 7 to 20 carbon atoms, or a silyl group; and a group represented by the following formula (4):

-R⁵-CH₂-Si (R¹) ₃₋ₐ (X) ₐ (4)

in which in formula (4), R¹ and a are the same as R¹ and a defined in formulas (1) to (3); and R⁵ represents an optionally substituted heteroatom.

In the structures represented by formulas (1) to (3), the carbon-carbon double bond is adjacent to the reactive silicon group represented by -Si(R¹)₃₋ₐ(X)ₐ, as mentioned above. Therefore, in the structures represented by formulas (1) to (3), the carbon-carbon double bond acts as an electron-withdrawing group, and the activity of the reactive silicon group is increased. Consequently, it is considered that the base resin (A) having the terminal group represented by any of formulas (1) to (3), or the resin composition for a foam containing the base resin (A) is superior in curing reactivity.

R⁴ represents a divalent linking group. The two bonds included in R⁴ are each bonded to a carbon atom, an oxygen atom, a nitrogen atom, or a sulfur atom within the linking group. Here, the phrase that the two bonds included in R⁴ are each bonded to a carbon atom, an oxygen atom, a nitrogen atom, or a sulfur atom within the linking group means that the two bonds included in R⁴ are each present on a carbon atom, an oxygen atom, a nitrogen atom, or a sulfur atom within the linking group. Specific examples of the divalent linking group include -(CH₂)ₙ-, -O-(CH₂)ₙ-, -S-(CH₂)ₙ-, -NR⁸-(CH₂)ₙ-, -O-C(=O)-NR⁸-(CH₂)ₙ-, and -NR⁸-C(=O)-NR⁸-(CH₂)ₙ-. Among these, -O-(CH₂)ₙ-, -O-C(=O)-NR⁸-(CH₂)ₙ-, and -NR⁸-C(=O)-NR⁸-(CH₂)ₙ- are preferred, and -O-CH₂- is more preferred since the raw materials are readily available. R⁸ represents a hydrogen atom or a hydrocarbon group having 1 to 10 carbon atoms. The hydrocarbon group represented by R⁸ is exemplified by an alkyl group such as a methyl group, an ethyl group, a n-propyl group, and an isopropyl group, an aryl group such as a phenyl group and a naphthyl group, and an aralkyl group such as a benzyl group. n is preferably an integer of 0 to 10, more preferably an integer of 0 to 5, even more preferably an integer of 0 to 2, particularly preferably 0 or 1, and most preferably 1.

R² and R³ each independently represent any of hydrogen, an alkyl group having 1 to 20 carbon atoms, an aryl group having 6 to 20 carbon atoms, an aralkyl group having 7 to 20 carbon atoms, and a silyl group. The number of carbon atoms in the alkyl group is preferably 1 to 12, more preferably 1 to 6, and particularly preferably 1 to 4. The number of carbon atoms in the aryl group is preferably 6 to 12, and more preferably 6 to 10. The number of carbon atoms in the aralkyl group is preferably 7 to 12. R² and R³ are specifically exemplified by: hydrogen; alkyl groups such as a methyl group, an ethyl group, and a cyclohexyl; aryl groups such as a phenyl group, and a tolyl group; aralkyl groups such as a benzyl group, and a phenethyl group; and silyl groups such as a trimethylsilyl group. Among these, hydrogen, a methyl group, and a trimethylsilyl group are preferred, hydrogen and a methyl group are more preferred, and hydrogen is even more preferred.

The structures represented by the above formulas (1) to (3) are preferably structures represented by following formulas (5) to (7), respectively: 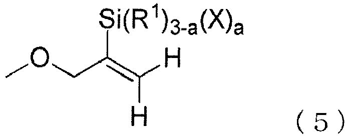 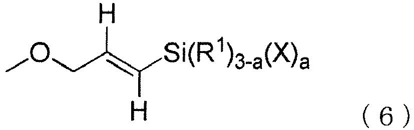 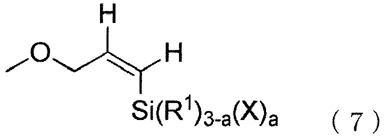 R¹, X, and a are as described above.

In formulas (1) to (4), the hydrocarbon group represented by R¹ is identical to the hydrocarbon group represented by R^{1a} in formula (1a). Examples of the hydrocarbon group represented by R¹ include: alkyl groups such as a methyl group, and an ethyl group; alkyl groups having a hetero-containing group such as a chloromethyl group, and a methoxymethyl group; cycloalkyl groups such as a cyclohexyl group; aryl groups such as a phenyl group; and aralkyl groups such as a benzyl group. As R¹, a methyl group, a methoxymethyl group, and a chloromethyl group are preferred, a methyl group and a methoxymethyl group are more preferred, and a methoxymethyl group is even more preferred.

X in formulas (1) to (4) is as described above in connection with formula (1a).

R⁵ in formula (4) represents an optionally substituted heteroatom. Since R⁵ represents an electron-rich heteroatom, a terminal group having the reactive silicon group represented by formula (4) exhibits higher reactivity. The optionally substituted heteroatom represented by R⁵ in formula (4) is not particularly limited as long as the optionally substituted heteroatom does not inhibit the object of the present invention. Specific examples of the heteroatom include O, N, and S. When R⁵ represents an unsubstituted heteroatom, specific examples of the divalent group represented by -R⁵-include -O- and -S-. When R⁵ represents a substituted heteroatom, specific examples of the divalent group represented by -R⁵- include -SO-, -SO₂-, -NH-, and -NR⁶-. R⁶ as a substituent is not particularly limited. Preferable examples of R⁶ include a hydrocarbon group and an acyl group represented by -CO-R⁷. R⁷ preferably represents a hydrocarbon group. Examples of the hydrocarbon group represented by R⁶ and R⁷ are identical to those for the hydrocarbon group represented by R¹.

Hereinafter, the main chain structure of the base resin (A) will be described.

### [Main Chain Structure]

The main chain structure of the base resin (A) may be linear or have a branched chain, as described above. The main chain structure of the base resin (A) is not particularly limited. As the base resin (A), polymers that include the main chain skeleton having various types of main chain structures can be used. The polymer constituting the main chain skeleton of the base resin (A) is exemplified by a polyoxyalkylene-based polymer, a hydrocarbon-based polymer, a polyester-based polymer, a vinyl-based (co)polymer, a (meth)acrylic acid ester-based (co)polymer, a graft polymer, a polysulfide-based polymer, a polyamide-based polymer, a polycarbonate-based polymer, a polymer having a urethane bond and/or urea bond (urethane prepolymer), and a diallyl phthalate-based polymer.

Examples of the polyoxyalkylene-based polymer include polyoxyethylene, polyoxypropylene, polyoxybutylene, polyoxytetramethylene, polyoxyethylene-polyoxypropylene copolymer, and polyoxypropylene-polyoxybutylene copolymer.

Examples of the hydrocarbon-based polymer include ethylene-propylene-based copolymer, polyisobutylene, copolymers of isobutylene and isoprene, poly chloroprene, polyisoprene, copolymers of isoprene or butadiene with acrylonitrile and/or styrene or the like, polybutadiene, copolymers of isoprene or butadiene with acrylonitrile and styrene, and hydrogenated polyolefin-based polymers obtained by hydrogenation of these polyolefin-based polymers.

Examples of the polyester-based polymer include polymers having an ester bond such as polymers obtained by a condensation reaction of a dibasic acid such as adipic acid with a glycol, and polymers obtained by ring-opening polymerization of lactones.

Examples of the vinyl-based (co)polymer include (co)polymers obtained by subjecting a vinyl-based monomer such as (meth)acrylic acid ester, vinyl acetate, acrylonitrile, and styrene to radical polymerization alone or in combination of a plurality of types.

Examples of the (meth)acrylic acid ester-based (co)polymer include (co)polymers obtained by subjecting a (meth)acrylic acid ester monomer such as methyl (meth)acrylate, ethyl (meth)acrylate, butyl (meth)acrylate, 2-ethylhexyl (meth)acrylate, and stearyl (meth)acrylate to radical polymerization alone or in combination of a plurality of types. The (meth)acrylic acid ester-based (co)polymer is a so-called acrylic resin.

Examples of the graft polymer include polymers obtained by performing polymerization of a vinyl-based monomer in the various types of polymers described above.

Examples of the polyamide-based polymer include nylon 6 obtained by ring-opening polymerization of ε-caprolactam, nylon 6-6 obtained by condensation polymerization of hexamethylenediamine and adipic acid, nylon 6-10 obtained by condensation polymerization of hexamethylenediamine with sebacic acid, nylon 11 obtained by condensation polymerization of ε-aminoundecanoic acid, nylon 12 obtained by ring-opening polymerization of ε-aminolaurolactam, and copolymer nylons having two or more components out of the above-mentioned nylons.

Examples of the polycarbonate-based polymer include a polymer produced by condensation polymerization of bisphenol A and carbonyl chloride.

Examples of the polymer having a urethane bond and/or urea bond (urethane prepolymer) include a liquid polymer compound having an isocyanate group at a molecular end, which is obtained by a reaction of a polyol with an excessive amount of a polyisocyanate compound.

In the present specification, "(meth)acrylate" means "acrylate and/or methacrylate".
"(Meth)acrylic acid" means "acrylic acid and/or methacrylic acid".
"(Co)polymer" means "polymer and/or copolymer".

Among the polymers constituting the main chain skeleton of the base resin (A), saturated hydrocarbon-based polymers such as polyisobutylene, hydrogenated polyisoprene, and hydrogenated polybutadiene, polyoxyalkylene-based polymers, and acrylic resins ((meth)acrylic acid ester-based polymers) are preferred from the viewpoint of the comparatively low glass transition temperature, and superior cold resistance of an obtained cured product therefrom.

The glass transition temperature of the polymer constituting the main chain skeleton of the base resin (A) is not particularly limited, but is preferably 20°C or lower, more preferably 0°C or lower, and particularly preferably - 20°C or lower. When the glass transition temperature is above 20°C, the viscosity of the resin composition for a foam may be higher in the winter season or in cold areas, leading to unfavorable workability, and furthermore, the flexibility of the foam may decrease, leading to a reduction in the ultimate elongation. The glass transition temperature is determined by DSC measurement.

Furthermore, it is also preferred that the base resin (A) contains a resin having a glass transition temperature of 35°C or higher. In this case, shrinkage of the foam after the expansion is likely to be suppressed. From the viewpoint that the shrinkage of the foam after the expansion is particularly likely to be suppressed, it is preferred that the base resin (A) contains a resin having a glass transition temperature of lower than 35°C in addition to the resin having a glass transition temperature of 35°C or higher. The glass transition temperature of the base resin (A) can be changed by adjusting the type of the main chain skeleton, the type of the units constituting the main chain, the composition of the units constituting the main chain, and the molecular weight, or the like.

Among the polymers constituting the main chain skeleton of the base resin (A), the polyoxyalkylene-based polymer and the acrylic resin are preferred from the viewpoint of their higher moisture permeability or the like, and the polyoxyalkylene-based polymer is more preferred, and a polyoxypropylene-based polymer is most preferred. Furthermore, from the viewpoint that the shrinkage of the foam after the expansion is likely to be suppressed, the base resin (A) preferably contains the acrylic resin, and/or the polyoxyalkylene-based polymer. In the case where the base resin (A) contains the acrylic resin and the polyoxyalkylene-based polymer, the amount of the acrylic resin in 100 parts by weight of the base resin (A) is preferably 3 parts by weight or more and 80 parts by weight or less and, more preferably 5 parts by weight or more and 50 parts by weight or less, even more preferably 5 parts by weight or more and 30 parts by weight or less from the viewpoint that the resin composition for a foam having a viscosity within an appropriate range is likely to be obtained. When the base resin (A) has a low viscosity, it is easy to stir the resin composition for a foam in the production of the foam. When the base resin (A) has a low viscosity, in particular, in the case where the resin composition for a foam is a multi-liquid type composition of two-liquid types or more-liquid types, homogeneous mixing of each liquid by means of a static mixer or the like in the foam production is easy. As such, it is preferred that the content of the acrylic resin in the base resin (A) falls within the aforementioned range.

Introduction of the reactive silicon group into the main chain of the base resin (A) may be performed by a known method. For example, the following methods can be mentioned.

Method I: an organic polymer having a functional group such as a hydroxy group is reacted with a compound having an active group that is reactive with the functional group and an unsaturated group, to obtain an organic polymer having an unsaturated group. Then, the resultant organic polymer having an unsaturated group is reacted with a hydrosilane compound having a reactive silicon group through hydrosilylation.

Examples of the compound having a reactive active group and an unsaturated group, which can be used in Method I, include unsaturated group-containing epoxy compounds such as allyl glycidyl ether, and compounds having a carbon-carbon double bond such as allyl chloride, methallyl chloride, vinyl bromide, allyl bromide, methallyl bromide, vinyl iodide, allyl iodide, and methallyl iodide. Furthermore, examples of a compound having a carbon-carbon triple bond include halogenated hydrocarbon compounds having a carbon-carbon triple bond such as propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Among these, propargyl chloride, propargyl bromide, and propargyl iodide are more preferred. A hydrocarbon compound having an unsaturated bond other than the halogenated hydrocarbon having a carbon-carbon triple bond, such as vinyl chloride, allyl chloride, methallyl chloride, vinyl bromide, allyl bromide, methallyl bromide, vinyl iodide, allyl iodide, and methallyl iodide may be used along with the halogenated hydrocarbon compound having a carbon-carbon triple bond.

Examples of the hydrosilane compound which can be used in Method I include halogenated silanes, alkoxysilanes, acyloxysilanes, and ketoximatesilanes. The hydrosilane compound is not limited to these compounds.

Examples of the halogenated silanes include trichlorosilane, methyldichlorosilane, dimethylchlorosilane, and phenyldichlorosilane.

Examples of the alkoxysilanes include trimethoxysilane, triethoxysilane, triisopropoxysilane, dimethoxymethylsilane, diethoxymethylsilane, diisopropoxymethylsilane, (methoxymethyl)dimethoxysilane, phenyldimethoxysilane, and 1-[2-(trimethoxysilyl)ethyl]-1,1,3,3-tetramethyldisiloxane.

Examples of the acyloxysilanes include methyldiacetoxysilane, and phenyldiacetoxysilane.

Examples of the ketoximatesilanes include bis(dimethylketoximate)methylsilane, and bis(cyclohexylketoximate)methylsilane.

Among these, halogenated silanes and alkoxysilanes are particularly preferred. Alkoxysilanes are most preferred from the viewpoint of being mildly hydrolyzable and easy to handle.

Among the alkoxysilanes, dimethoxymethylsilane is preferred from the viewpoint that, for example, it is readily available, a resin composition for a foam which is superior in curability and storage stability is likely to be obtained, and a foam superior in tensile strength is likely to be produced using the resin composition for a foam. Furthermore, trimethoxysilane, and triethoxysilane are also preferred from the viewpoint that a resin composition for a foam which is superior in curability is likely to be obtained.

Method II: a method in which a compound having a mercapto group and a reactive silicon group is introduced through a radical addition reaction in the presence of a radical initiator and/or a radical generation source into an unsaturated group site of an organic polymer having an unsaturated group which can be obtained in a similar manner to Method I.

Examples of the compound having a mercapto group and a reactive silicon group which can be used in Method II include 3-mercapto-n-propyltrimethoxysilane, 3-mercapto-n-propylmethyldimethoxysilane, 3-mercapto-n-propyltriethoxysilane, 3-mercapto-n-propylmethyldiethoxysilane, mercaptomethyltrimethoxysilane, and mercaptomethyltriethoxysilane. The compound having a mercapto group and a reactive silicon group is not limited to these compounds.

Method III: a method in which an organic polymer having a functional group such as a hydroxy group, an epoxy group, and an isocyanate group in the molecule is reacted with a compound having a functional group reactive with the aforementioned functional group and a reactive silicon group.

The method for reacting an organic polymer having a hydroxy group with a compound having an isocyanate group and a reactive silicon group, which can be employed in Method III, is not particularly limited, but examples include a method described in Japanese Unexamined Patent Application, Publication No. H3-47825.

Examples of the compound having an isocyanate group and a reactive silicon group, which can be used in Method III, include 3-isocyanato-n-propyltrimethoxysilane, 3-isocyanato-n-propylmethyldimethoxysilane, 3-isocyanato-n-propyltriethoxysilane, 3-isocyanato-n-propylmethyldiethoxysilane, isocyanatomethyltrimethoxysilane, isocyanatomethyltriethoxysilane, isocyanatomethyldimethoxymethylsilane, and isocyanatomethyldiethoxymethylsilane. The compound having an isocyanate group and a reactive silicon group is not limited to these compounds.

A silane compound having three hydrolyzable groups bonded to a single silicon atom, such as trimethoxysilane, may cause a disproportionation reaction. As the disproportionation reaction proceeds, an unstable compound like dimethoxysilane may be generated, leading to difficulty in handling. However, in 3-mercapto-n-propyltrimethoxysilane and 3-isocyanato-n-propyltrimethoxysilane, such a disproportionation reaction does not proceed. Therefore, in the case where a group having three hydrolyzable groups bounded to a single silicon atom, such as trimethoxysilyl group, is used as the silicon-containing group, a method described in Method II or Method III is preferably employed.

On the other hand, a silane compound represented by the following formula (2a) does not cause a disproportionation reaction.

H- (SiR^{2a}₂O) ₘSiR^{2a}₂-R^{3a}-SiX₃ (2a)

Here, in formula (2a), X is as defined in formula (1a). 2m+2 R^{2a} are each independently the same as defined for R^{1a} in formula (1a). R^{3a} represents a substituted or unsubstituted divalent hydrocarbon group having 1 to 20 carbon atoms. m represents an integer of 0 to 19.

Therefore, in the case where the group having three hydrolyzable groups bonded to a single silicon atom is introduced by way of Method I, the silane compound represented by formula (2a) is preferably used. From the viewpoint of availability and cost of the silane compound, 2m+2 R^{2a} each independently represent preferably a hydrocarbon group having 1 to 20 carbon atoms, more preferably a hydrocarbon group having 1 to 8 carbon atoms, and even more preferably a hydrocarbon group having 1 to 4 carbon atoms. As R^{3a}, a divalent hydrocarbon group having 1 to 12 carbon atoms is preferred, a divalent hydrocarbon group having 2 to 8 carbon atoms is more preferred, and a divalent hydrocarbon group having two carbon atoms is even more preferred. Most preferably, m is 1.

Examples of the silane compound represented by formula (2a) include 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

In Method I or Method III described above, the method in which an organic polymer having a hydroxy group at an end is reacted with a compound having an isocyanate group and a reactive silicon group is preferred since the method yields a higher conversion in a relatively short reaction time. Further, since the organic polymer having a reactive silicon group which is obtained by Method I is less viscous than the organic polymer having a reactive silicon group which is obtained by Method III, and gives a resin composition for a foam with favorable workability, and furthermore, the organic polymer having a reactive silicon group which is obtained by Method II has a strong odor arising from the mercaptosilane, Method I is particularly preferred.

Hereinafter, the polyoxyalkylene-based polymer having a reactive silicon group and the (meth)acrylic acid ester-based copolymer, which are particularly preferable among the base resin (A), will be described in detail.

### (Polyoxyalkylene-Based Polymer)

The main chain structure of the polyoxyalkylene-based polymer preferably includes a repeating unit represented by the following formula (3a).

-R^{4a}-O- (3a)

Here, in formula (3a), R^{4a} represents a linear or branched alkylene group having 1 to 14 carbon atoms, preferably a linear or branched alkylene group having 2 to 4 carbon atoms.

Examples of the repeating unit represented by formula (3a) include -CH₂O-, -CH₂CH₂O-, -CH₂CH(CH₃)O-, -CH₂CH(C₂H₅)O-, - CH₂C(CH₃)₂O-, and -CH₂CH₂CH₂CH₂O-.

The main chain of the polyoxyalkylene-based polymer may include only one type of repeating unit, or two or more types of repeating units. The polyoxyalkylene-based polymer is preferably a polyoxypropylene-based polymer which is amorphous and has a relatively low viscosity.

A synthesis method of the polyoxyalkylene-based polymer is exemplified by: a polymerization process using an alkali catalyst such as KOH; a polymerization process using a transition metal compound-porphyrin complex catalyst such as a complex obtained by reacting an organoaluminum compound with porphyrin, as described in Japanese Unexamined Patent Application, Publication No. S61-215623; a polymerization process using a combined metal cyanide complex catalyst (for example, zinc hexacyanocobaltate glyme complex catalyst) as described in Japanese Examined Patent Application, Publication No. S46-27250, Japanese Examined Patent Application, Publication No. S59-15336, U.S. Patent No. 3,278,457, U.S. Patent No. 3,278,458, U.S. Patent No. 3,278,459, U.S. Patent No. 3,427,256, U.S. Patent No. 3,427,334, and U.S. Patent No. 3,427,335 or the like; a polymerization process using a catalyst containing a polyphosphazene salt as described in Japanese Unexamined Patent Application, Publication No. H10-273512; and a polymerization process using a catalyst containing a phosphazene compound as described in Japanese Unexamined Patent Application, Publication No. H11-060722. The synthesis method of the polyoxyalkylene-based polymer is not limited to these polymerization processes.

Among these synthesis methods, a polymerization process in which an initiator is reacted with an alkylene oxide in the presence of the combined metal cyanide complex catalyst is preferred, since the polymerization process can yield a polymer having a narrow molecular weight distribution.

Examples of the combined metal cyanide complex catalyst include Zn₃[Co(CN)₆]₂ (zinc hexacyanocobaltate complex). Furthermore, a catalyst which includes the combined metal cyanide complex and an alcohol and/or an ether coordinating thereto as an organic ligand may be used.

The initiator is preferably a compound having at least two active hydrogen groups. Examples of the active hydrogencontaining compound include polyhydric alcohols such as ethylene glycol, diethylene glycol, propylene glycol, and glycerin, and linear or branched polyether compounds having a number average molecular weight of 500 to 20,000.

Examples of the alkylene oxide include ethylene oxide, propylene oxide, and isobutylene oxide.

Examples of the polyoxyalkylene-based polymer having a reactive silicon group include polymers proposed in publications such as Japanese Examined Patent Application, Publication No. S45-36319, Japanese Examined Patent Application, Publication No. S46-12154, Japanese Unexamined Patent Application, Publication No. S50-156599, Japanese Unexamined Patent Application, Publication No. S54-6096, Japanese Unexamined Patent Application, Publication No. S55-13767, Japanese Unexamined Patent Application, Publication No. S55-13468, Japanese Unexamined Patent Application, Publication No. S57-164123, Japanese Examined Patent Application, Publication No. H3-2450, U.S. Patent No. 3,632,557, U.S. Patent No. 4,345,053, U.S. Patent No. 4,366,307, and U.S. Patent No. 4,960,844. Furthermore, also preferred are polyoxyalkylene-based polymers having a reactive silicon group, the polyoxyalkylene-based polymer having a high molecular weight and a narrow molecular weight distribution, i.e. having a number average molecular weight of 6,000 or more, a molecular weight distribution (Mw/Mn) of 1.6 or less or 1.3 or less, proposed in publications such as Japanese Unexamined Patent Application, Publication No. S61-197631, Japanese Unexamined Patent Application, Publication No. S61-215622, Japanese Unexamined Patent Application, Publication No. S61-215623, Japanese Unexamined Patent Application, Publication No. S61-218632, Japanese Unexamined Patent Application, Publication No. H3-72527, Japanese Unexamined Patent Application, Publication No. H3-47825, Japanese Unexamined Patent Application, Publication No. H8-231707, and the like. Such a polyoxyalkylene-based polymer having a reactive silicon group may be used alone, or in combination of two or more types.

### ((Meth)acrylic Acid Ester-Based (Co)polymer)

The (meth)acrylic acid ester-based (co)polymer having a reactive silicon group can be obtained by polymerizing various (meth)acrylic acid ester-based monomers alone or in combination of a plurality of types.

Examples of the (meth)acrylic acid ester-based monomers include (meth)acrylic acid-based monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, 3-((meth)acryloyloxy)-n-propyltrimethoxysilane, 3-((meth)acryloyloxy)-n-propyldimethoxymethylsilane, (meth)acryloyloxymethyltrimethoxysilane, (meth)acryloyloxymethyltriethoxysilane, (meth)acryloyloxymethyldimethoxymethylsilane, (meth)acryloyloxymethyldiethoxymethylsilane, and ethylene oxide adducts of (meth)acrylic acid. The (meth)acrylic acid ester-based monomer is not limited to these monomers.

The (meth)acrylic acid ester-based (co)polymer may be produced by copolymerizing the following vinyl-based monomers along with the (meth)acrylic acid ester-based monomer.

Examples of the vinyl-based monomer include: styrene-based monomers such as styrene, vinyl toluene, α-methylstyrene, chlorostyrene, styrenesulfonic acid, and styrenesulfonic acid salts; silicon-containing vinyl-based monomers such as vinyltrimethoxysilane, and vinyltriethoxysilane; maleic acid or maleic acid derivatives such as maleic anhydride, maleic acid, and monoalkyl esters and dialkyl esters of maleic acid; fumaric acid or fumaric acid derivatives such as fumaric acid, and monoalkyl esters and dialkyl esters of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl-based monomers such as acrylonitrile and methacrylonitrile; amide group-containing vinyl-based monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, allyl chloride, and allyl alcohol. These may be polymerized alone, or two or more of them may be copolymerized.

As the (meth)acrylic acid ester-based (co)polymer, (co)polymers of the (meth)acrylic acid ester-based monomer, and copolymers of the styrene-based monomer and the (meth)acrylic acid-based monomer are preferred, (co)polymers of the (meth)acrylic acid ester-based monomer are more preferred, and (co)polymers of an acrylic acid ester-based monomer are even more preferred from the viewpoint of the physical properties or the like.

A production method of the (meth)acrylic acid ester-based (co)polymer is not particularly limited. The (meth)acrylic acid ester-based (co)polymer can be produced by known methods. However, a polymer obtained by a usual free radical polymerization process using an azo-based compound, a peroxide or the like as a polymerization initiator generally has an index for molecular weight distribution of more than 2 and tends to have high viscosity. Therefore, to obtain a (meth)acrylic acid ester-based (co)polymer that has a narrow molecular weight distribution and low viscosity, and has a high proportion of crosslinkable functional groups at the ends of the molecular chain, a living radical polymerization process is preferably employed.

Among "living radical polymerization processes", the "atom transfer radical polymerization process" in which a (meth)acrylic acid ester-based monomer is polymerized using an organic halide, a halogenated sulfonyl compound and the like as an initiator and a transition metal complex as a catalyst is more preferred as a production method of (meth)acrylic acid ester-based polymers having a specific functional group, since the process has the characteristic features of the "living radical polymerization process" described above, and additionally gives a polymer having a halogen or the like, which is relatively advantageous for a transformation reaction of the functional group, at an end and has a greater degree of freedom in design of the initiator and the catalyst. This atom transfer radical polymerization process is described in, for example, Matyjaszewski et al., Journal of the American Chemical Society (J. Am. Chem. Soc.), 1995, vol. 117, pp. 5614.

As the production method of the (meth)acrylic acid ester-based (co)polymer having a reactive silicon group, for example, Japanese Examined Patent Application, Publication No. H3-14068, Japanese Examined Patent Application, Publication No. H4-55444, and Japanese Unexamined Patent Application, Publication No. H6-211922 disclose a production method that employs a free radical polymerization process using a chain transfer agent. Furthermore, Japanese Unexamined Patent Application, Publication No. H9-272714 and the like disclose a production method that employs the atom transfer radical polymerization process. The production method of the (meth)acrylic acid ester-based (co)polymer having a reactive silicon group is not limited to these methods. The aforementioned (meth)acrylic acid ester-based (co)polymer having a reactive silicon group may be used alone, or in combination of two or more types.

These base resins having a reactive silicon group (A) may be used alone or in combination of two or more types. Specifically, when two or more types of the base resins (A) are used in combination, base resins (A) having the same type of main chain may be used in combination, or base resins (A) having different types of main chain may be used in combination, for example, like a combination of a polyoxyalkylene-based polymer having a reactive silicon group and a (meth)acrylic acid ester-based polymer having a reactive silicon group.

### <Chemical Foaming Agent (B)>

The resin composition for a foam contains a chemical foaming agent (B). The chemical foaming agent (B) contains a dicarbonate diester (B-1). After the preparation of the resin composition for a foam, the dicarbonate diester (B-1) can decompose and foam at a preferable rate in accordance with the rate of a curing reaction of the base resin (A) even under low temperature conditions like room temperature. The dicarbonate diester (B-1) is likely to foam more favorably in the presence of water (C) than under anhydrous conditions.

For example, Japanese Examined Patent Application, Publication No. S46-35992 discloses that in the case of addition of diethyl dicarbonate as a foaming agent to a resin composition for a foam which is cured via an addition reaction of an unsaturated polyester, expansion of the resin composition through foaming proceeds over a time period of about 20 minutes and curing of the resin composition proceeds over a long time period of more than 20 minutes in the production of a foam at room temperature (see Example 8 in Japanese Examined Patent Application, Publication No. S46-35992). However, for example, in the case where the base resin having a reactive silicon group (A) is cured and expanded concurrently, the curing of the base resin (A) may proceed to a considerable extent in about 5 minutes. Therefore, it is predicted that if a chemical foaming agent (B) that foams over a time period of 20 minutes is applied to the resin composition for a foam containing the base resin having a reactive silicon group (A), the base resin (A) is rapidly cured before a desired expansion ratio is reached, resulting in the formation a foam having a low expansion ratio. However, according to the studies by the present inventors, it has been unexpectedly found that when the chemical foaming agent (B) that contains the dicarbonate diester (B-1) is blended into the resin composition for a foam which contains the base resin (A) and the silanol condensation catalyst (D), the resin composition can be caused to expand to a desired extent within a short period of time.

The dicarbonate diester is represented by the following formula (B1).

R^{b}-O-CO-O-CO-O-R^{b} ··· (B1)

In formula (B1), R^{b} represents an organic group. The organic group represented by R^{b} is preferably a hydrocarbon group. The two R^{b}s may be identical to or different from each other, and are preferably identical to each other.

The number of carbon atoms of the hydrocarbon group represented by R^{b} is preferably 1 to 16, more preferably 1 to 12, even more preferably 1 to 8, and particularly preferably 1 to 6. Examples of the hydrocarbon group represented by R^{b} include an alkyl group, an alicyclic group such as a cycloalkyl group, an aralkyl group, and an aryl group. The alkyl group may be linear or branched, and a linear alkyl group is preferred.

Specific examples of the alkyl group include a methyl group, an ethyl group, a n-propyl group, an isopropyl group, a n-butyl group, an isobutyl group, a sec-butyl group, a tert-butyl group, a n-pentyl group, a n-hexyl group, a n-heptyl group, a n-octyl group, a 2-ethylhexyl group, a n-nonyl group, a n-decyl group, a n-undecyl group, and a n-dodecyl group. Specific examples of the cycloalkyl group include a cyclopropyl group, a cyclobutyl group, a cyclopentyl group, a cyclohexyl group, a cycloheptyl group, and a cyclooctyl group. Specific examples of the aralkyl group include a benzyl group, a phenethyl group, a naphthalen-1-ylmethyl group, and a naphthalen-2-ylmethyl group. Specific examples of the aryl group include a phenyl, a naphthalen-1-yl group, a naphthalen-2-yl group, a 4-phenylphenyl group, a 3-phenylphenyl group, and 2-phenylphenyl group.

As the dicarbonate diester (B-1) represented by formula (B1), dimethyl dicarbonate, diethyl dicarbonate, di-n-propyl dicarbonate, diisopropyl dicarbonate, di-n-butyl dicarbonate, diisobutyl dicarbonate, di-sec-butyl dicarbonate, di-tert-butyl dicarbonate, di-n-pentyl dicarbonate, and di-n-hexyl dicarbonate are preferred. As the dicarbonate diester (B-1), dimethyl dicarbonate, diethyl dicarbonate, di-n-propyl dicarbonate, and dicarbonate diisopropyl are preferred, and dimethyl dicarbonate, and diethyl dicarbonate are more preferred from the viewpoint that they are readily available and have a lower molecular weight leading to a larger amount of foam per unit weight. Further, from the viewpoint of higher volatility and lower toxicity of a product generated after hydrolysis of the dicarbonate diester, diethyl dicarbonate is particularly preferred as the dicarbonate diester (B-1).

It is preferred that the chemical foaming agent (B) consists principally of the dicarbonate diester (B-1) from the viewpoint that the resin composition for a foam may contain no water (C), or only a small amount of water (C), and that a high expansion ratio is likely to be attained by a small amount of use of the chemical foaming agent (B). The proportion of the weight of the dicarbonate diester (B-1) to the weight of the chemical foaming agent (B) is preferably 50% by weight or more, more preferably 70% by weight or more, even more preferably 80% by weight or more, particularly preferably 90% by weight or more, and most preferably 100% by weight or more. In the case where the chemical foaming agent (B) contains a chemical foaming agent other than the dicarbonate diester (B-1), various known chemical foaming agents may be used as the other chemical foaming agent without inhibiting the object of the present invention. Examples of a preferred chemical foaming agent (B) other than the dicarbonate diester (B-1) include an isocyanatosilane compound (B-2) such as tetraisocyanatosilane (Si(NCO)₄), methyltriisocyanatosilane (SiCH₃(NCO)₃), isocyanatomethyltrimethoxysilane, isocyanatomethyltriethoxysilane, 2-isocyanatoethyltrimethoxysilane, 2-isocyanatoethyltriethoxysilane, 3-isocyanato-n-propyltrimethoxysilane, 3-isocyanato-n-propyltriethoxysilane, 4-isocyanato-n-butyltrimethoxysilane, and 4-isocyanato-n-butyltriethoxysilane. In particular, isocyanatosilanes bearing an alkoxysilyl group are preferred in that they are immobilized on a polymer. The isocyanatosilane compound (B-2) may be used in combination with the dicarbonate diester (B-1).

The amount of the chemical foaming agent (B) used may be appropriately selected in view of the expansion ratio of the foam. The content of the chemical foaming agent (B) is preferably 2 parts by weight or more and 200 parts by weight or less, more preferably 5 parts by weight or more and 170 parts by weight or less, even more preferably 5 parts by weight or more and 130 parts by weight or less, and particularly preferably 5 parts by weight or more and 100 parts by weight or less with respect to 100 parts by weight of the base resin (A).

The content of the dicarbonate diester (B-1) as the chemical foaming agent (B) is preferably 1 part by weight or more and 50 parts by weight or less, more preferably 2 parts by weight or more and 40 parts by weight or less, and particularly preferably 5 parts by weight or more and 30 parts by weight or less with respect to 100 parts by weight of the base resin (A).

The chemical foaming agent (B) has been described thus far, and a physical foaming agent may be added to the resin composition for a foam to assist the expansion of the resin composition for a foam in addition to the expansion from the chemical foaming agent. The boiling point of the physical foaming agent is preferably 100°C or lower, more preferably 50°C or lower from the viewpoint of foamability, workability, and safety. Specific examples of the physical foaming agent include hydrocarbons (for example, LPG (propane), butane and the like), halogenated hydrocarbons, ethers (for example, diethyl ether), chlorofluorocarbons (CFC), hydrofluorocarbons (HFC), hydrochlorofluorocarbons (HCFC), fluoroolefins (FO), chlorofluoroolefins (CFO), hydrofluoroolefins (HFO), hydrochlorofluorofluoroolefins (HCFO), carbon dioxide, nitrogen, and air. Among these physical foaming agents, hydrocarbons, ethers, carbon dioxide, nitrogen, and air are preferred from the viewpoint of environmental compatibility.

### <Water (C)>

The resin composition for a foam contains, or does not contain, water (C) . Even when the resin composition for a foam contains no water (C), the curing and expansion proceeds. On the other hand, water (C) serves to accelerate the foaming reaction of the chemical foaming agent (B) and the curing reaction of the base resin (A). In the case where the resin composition for a foam contains water (C), the content of water (C) is preferably 1 part by weight or more and 70 parts by weight or less, more preferably 2 parts by weight or more and 60 parts by weight or less, and even more preferably 2 parts by weight or more and 50 parts by weight or less with respect to 100 parts by weight of the base resin (A). When the content of water (C) falls within the range described above, the curing is likely to favorably proceed with sufficient expansion, and a foam having fine and compact foaming cells and exhibiting superior flexibility is likely to be obtained.

The content of water (C) is preferably 0.05 parts by weight or more, more preferably 0.1 parts by weight or more with respect to 1 part by weight of the dicarbonate diester (B-1). When such an amount of water is used, the dicarbonate diester (B-1) can favorably react with water (C), to achieve particularly favorable foaming, and additionally a hydrolytic condensation reaction between the reactive silicon groups included in the base resin (A) proceeds favorably. In particular, in the case where the resin composition for a foam contains only the dicarbonate diester (B-1) as the chemical foaming agent (B), the content of water (C) in the resin composition for a foam is preferably 0.05 parts by weight or more and 0.5 parts by weight or less, and more preferably 0.05 parts by weight or more and 0.3 parts by weight or less with respect to 1 part by weight of the dicarbonate diester (B-1). In this case, the content of water (C) in the foam after the preparation can be reduced with particularly favorable foaming, and hence a drying step for removing a volatile component such as water can be omitted during the foam production. From the viewpoint of merely reducing the content of water (C) in the foam, the content of water (C) in the resin composition for a foam is preferably 0 parts by weight or more and 0.05 parts by weight or less, more preferably 0 parts by weight or more and 0.03 parts by weight or less, and particularly preferably 0 parts by weight, with respect to 1 part by weight of the dicarbonate diester (B-1), which means that the resin composition for a foam contains no water (C). Meanwhile, 1 mol of the dicarbonate diester (B-1) reacts with 1 mol of water (C) to generate 2 mol of carbon dioxide gas (carbon dioxide). Therefore, from the viewpoint of causing the dicarbonate diester (B-1) to efficiently foam by means of water (C) in the resin composition for a foam, a molar ratio of the dicarbonate diester (B-1) and water (C) in terms of dicarbonate diester (B-1) :water (C) is preferably 0.8:1 to 1:0.8, more preferably 0.9:1 to 1:0.9, and even more preferably 0.95:1 to 1:0.95. Although the reason for occurrence of favorable foaming from the dicarbonate diester (B-1) even with insufficient water (C) is unclear, it is considered that hydrolysis of the dicarbonate diester (B-1) by the moisture in air and the material takes place, and/or that carbon dioxide is generated through a decomposition reaction separate from hydrolysis.

### <Silanol Condensation Catalyst (D)>

The resin composition for a foam contains a silanol condensation catalyst (D). The silanol condensation catalyst (D) is not particularly limited as long as it can be used as a condensation catalyst, and any catalyst can be used; however, from the viewpoint that a reduction in catalyst activity due to the influence of carbonic acid generated by a foaming reaction of the dicarbonate diester (B-1) is less likely to occur, a neutral or weakly acidic silanol condensation catalyst (D) is preferred. The carbonic acid is generated through dissolution of carbon dioxide in water.

Examples of the silanol condensation catalyst (D) include tetravalent tin compounds; divalent tin compounds; reaction products and mixtures of the above-mentioned divalent tin compounds and amine-based compounds such as laurylamine that will be described below; monoalkyltins; titanic acid esters; organoaluminum compounds; metal carboxylates, reaction products and mixtures of metal carboxylates and amine-based compounds such as laurylamine that will be described below; chelate compounds; saturated aliphatic primary amines; saturated aliphatic secondary amines; saturated aliphatic tertiary amines; aliphatic unsaturated amines; aromatic amines; amines other than the above-mentioned amines; salts of the above-mentioned amines and carboxylic acids or the like; reaction products and mixtures of amine-based compounds and organotin compounds; low molecular weight polyamide resins obtained from a polyamine in excess and a polybasic acid; reaction products of a polyamine in excess and an epoxy compound; silane coupling agents having an amino group; and derivatives obtained by modifying silane coupling agents having an amino group.

Examples of the tetravalent tin compounds include: dialkyltin dicarboxylates; dialkyltin alkoxides; intramolecularly-coordinated derivatives of dialkyltins; reaction products between a dialkyltin oxide and an ester compound; reaction products between a dialkyltin oxide, a carboxylic acid and an alcohol compound; dialkyl compounds; reaction products between a dialkyltin oxide and a silicate compound; and oxy derivatives of the above-mentioned dialkyltin compounds (stannoxane compounds).

Specific examples of the dialkyltin dicarboxylates include dibutyltin dilaurate, dibutyltin diacetate, dibutyltin di(2-ethylhexanoate), dibutyltin dioctate, dibutyltin diversatate, dibutyltin distearate, dibutyltin di(methyl maleate), dibutyltin di(ethyl maleate), dibutyltin di(butyl maleate), dibutyltin di(isooctyl maleate), dibutyltin di(tridecyl maleate), dibutyltin di(oleyl maleate), dibutyltin di(benzyl maleate), dibutyltin maleate, dioctyltin diacetate, dioctyltin diversatate, dioctyltin distearate, dioctyltin dilaurate, dioctyltin di(ethyl maleate), and dioctyltin di(isooctyl maleate). Meanwhile, dibutyltin maleate is an oligomer or polymer including a structural unit represented by the following formula:

-Sn(-n-C₄H₉)₂-OCO-CH=CH=COO-

Specific examples of the dialkyltin alkoxides include dibutyltin dimethoxide, and dibutyltin diphenoxide.

Specific examples of the intramolecularly-coordinated derivatives of dialkyltins include dibutyltin diacetylacetonate, and dibutyltin di(ethyl acetoacetate).

Specific examples of the reaction products between a dialkyltin oxide and an ester compound include reaction products between a dialkyltin oxide such as dibutyltin oxide or dioctyltin oxide and an ester compound such as dioctyl phthalate, diisodecyl phthalate, or methyl maleate.

Examples of the reaction products between a dialkyltin oxide and a silicate compound include dibutyltin bis(triethoxysilicate), and dioctyltin bis(triethoxysilicate).

Specific examples of the divalent tin compounds include tin octoate, tin naphthenate, tin stearate, and tin versatate.

Specific examples of the monoalkyltins include: monobutyltin compounds such as monobutyltin trisoctoate and monobutyltin triisopropoxide; and monooctyltin compounds.

Specific examples of the titanic acid esters include tetrabutyl titanate, tetrapropyl titanate, tetra(2-ethylhexyl) titanate, and isopropoxytitanium bis(ethyl acetoacetate).

Specific examples of the organoaluminum compound include aluminum tris(acetylacetonate), aluminum tris(ethyl acetoacetate), and di-isopropoxyaluminum(ethyl acetoacetate).

Specific examples of the metal carboxylate include bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate. Specific examples of the carboxylic acid that gives the metal carboxylate include 2-ethylhexanoic acid, neodecanoic acid, versatic acid, oleic acid, and naphthenic acid.

Specific examples of the chelate compounds include zirconium tetra(acetylacetonate), zirconium tributoxy(acetylacetonate), dibutoxyzirconium diacetylacetonate, zirconium acetylacetonate bis(ethyl acetoacetate), and titanium tetra(acetylacetonate).

Specific examples of the saturated aliphatic primary amines include methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine.

Specific examples of the saturated aliphatic secondary amines include dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine.

Specific examples of the saturated aliphatic tertiary amines include triamylamine, trihexylamine, trioctylamine, and 1,4-diazabicyclo[2.2.2]octane (DABCO).

Specific examples of the aliphatic unsaturated amines include triallylamine, and oleylamine.

Specific examples of the aromatic amines include laurylaniline, stearylaniline, and triphenylamine.

Specific examples of the amines other than the above-mentioned amines include amine-based compounds such as monoethanolamine, diethanolamine, triethanolamine, diethylenetriamine, triethylenetetramine, oleylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, and 1,8-diazabicyclo[5.4.0]-7-undecene (DBU).

Examples of the reaction products and mixtures of amine-based compounds and organotin compounds include reaction products or mixtures of laurylamine and tin octoate.

Specific examples of the silane coupling agents having an amino group include 3-amino-n-propyltrimethoxysilane, 3-amino-n-propyltriethoxysilane, 3-amino-n-propyltriisopropoxysilane, 3-amino-n-propylmethyldimethoxysilane, 3-amino-n-propylmethyldiethoxysilane, N-(β-aminoethyl)-3-amino-n-propyltrimethoxysilane, N-(β-aminoethyl)-3-amino-n-propylmethyldimethoxysilane, N-(β-aminoethyl)-3-amino-n-propyltriethoxysilane, N-(β-aminoethyl)-3-amino-n-propylmethyldiethoxysilane, N-(β-aminoethyl)-3-amino-n-propyltriisopropoxysilane, 3-ureido-n-propyltrimethoxysilane, N-phenyl-3-amino-n-propyltrimethoxysilane, N-benzyl-3-amino-n-propyltrimethoxysilane, and N-vinylbenzyl-3-amino-n-propyltriethoxysilane.

Examples of the derivatives obtained by modifying silane coupling agents having an amino group described above include amino-modified silylpolymers, silylated aminopolymers, unsaturated aminosilane complexes, phenylamino long-chained alkylsilanes, and aminosilylated silicone.

Furthermore, examples of known silanol condensation catalysts include other acidic catalysts including fatty acids such as versatic acid and organic acidic phosphoric acid ester compounds, and basic catalysts.

Examples of the organic acidic phosphoric acid ester compound as an acidic catalyst include (CH₃O)₂-P(=O)(-OH), (CH₃O)-P(=O)(-OH)₂, (C₂H₅O)₂-P(=O)(-OH), (C₂H₅O)-P(=O)(-OH)₂, (C₃H₇O)₂-P(=O)(-OH), (C₃H₇O)-P(=O)(-OH)₂, (C₄H₉O)₂-P(=O)(-OH), (C₄H₉O)-P(=O)(-OH)₂, (C₈H₁₇O)₂-P(=O)(-OH), (C₈H₁₇O)-P(=O)(-OH)₂, (C₁₀H₂₁O)₂-P(=O)(-OH), (C₁₀H₂₁O)-P(=O)(-OH)₂, (C₁₃H₂₇O)₂-P(=O)(-OH), (C₁₃H₂₇O)-P(=O)(-OH)₂, (C₁₆H₃₃O)₂-P(=O)(-OH), (C₁₆H₃₃O)-P(=O)(-OH)₂, (HO-C₆H₁₂O)₂-P(=O)(-OH), (HO-C₆H₁₂O)-P(=O)(-OH)₂, (HO-C₈H₁₆O)-P(=O)(-OH), (HO-C₈H₁₆O)-P(=O)(-OH)₂, [(CH₂OH)(CHOH)O]₂-P(=O)(-OH), [(CH₂OH)(CHOH)O]-P(=O)(-OH)₂, [(CH₂OH)(CHOH)C₂H₄O]₂-P(=O)(-OH), and [(CH₂OH)(CHOH)C₂H₄O]-P(=O)(-OH)₂, but the organic acidic phosphoric acid ester compound is not limited to the substances listed above.

From the viewpoint of causing the curing of the resin composition for a foam to proceed favorably, among the preferred examples of the silanol condensation catalyst (D) mentioned above, tin-containing catalysts which contain Sn are preferred, and tin-containing catalysts which contain a tetravalent tin compound such as dialkyltin dicarboxylate, dialkyltin alkoxide, an intramolecularly-coordinated derivative of dialkyltins, a reaction product between a dialkyltin oxide and an ester compound, a tin compound obtained by reacting a dialkyltin oxide, a carboxylic acid, and an alcohol compound, a reaction product between a dialkyltin oxide and a silicate compound, and an oxy derivative of the above-mentioned dialkyltin compounds (stannoxane compound) are more preferred. With regard to the tin-containing catalyst, the higher the proportion of the mass of tin atoms in the mass of the tin-containing catalyst, the higher the catalyst activity and the more preferred the catalyst is. Furthermore, from the viewpoint of suppression of shrinkage of the foam over time after the foam production, dialkyltin dicarboxylates are preferred, and dibutyltin diacetate is more preferred as the silanol condensation catalyst (D).

From the viewpoint that a reduction in catalyst activity due to the influence of carbonic acid generated by the foaming reaction of the dicarbonate diester (B-1) is less likely to occur, and that the foaming reaction between the dicarbonate diester (B-1) and water and the curing reaction of the base resin (A) proceed in a particularly well-balanced manner, among the silanol condensation catalysts (D) listed above, a neutral or weakly acidic silanol condensation catalyst is preferred, and a weakly acidic silanol condensation catalyst is more preferred. Carbonic acid is generated through dissolution of carbon dioxide in water. Furthermore, when the neutral or weakly acidic silanol condensation catalyst is used, the progress of the foaming reaction of the dicarbonate diester (B-1) with water at the start of foaming is less likely to be inhibited. From the viewpoint of the ease in favorably curing the base resin (A), the silanol condensation catalyst (D) preferably contains, as the neutral or weakly acidic silanol condensation catalyst, a neutral or weakly acidic catalyst among the various tin-containing catalysts described above. Also from such a viewpoint, with regard to the silanol condensation catalyst (D), dialkyltin dicarboxylates are preferred as the neutral or weakly acidic tin-containing catalyst. As the neutral or weakly acidic dialkyltin dicarboxylate, a compound represented by the following formula (D1), or an oligomer or polymer including a structural unit represented by the following formula (D2) is preferred.

(R^{d1})(R^{d2})(R^{d3}COO)(R^{d4}COO)Sn··· (D1)

- (-(R^{d1})(R^{d2})Sn-OCOR^{d5}COO-)-··· (D2)

In formulas (D1) and (D2), R^{d1} and R^{d2} may be identical to or different from each other. R^{d1} and R^{d2} each represent a linear or branched alkyl group, and preferably a linear alkyl group. The number of carbon atoms of the alkyl group represented by R^{d1} and R^{d2} is not particularly limited, and is preferably 1 to 20, more preferably 2 to 16, and even more preferably 3 to 10. From the viewpoint that the tin-containing catalyst is readily available, and the activity of the tin-containing catalyst as the silanol condensation catalyst (D) is favorable, R^{d1} and R^{d2} are preferably a n-butyl group and a n-octyl group. In formula (D1), R^{d3} and R^{d4} each represent an organic group having 1 to 40 carbon atoms. The number of carbon atoms of the organic group represented by R^{d3} and R^{d4} is preferably 1 to 30. The organic group represented by R^{d3} and R^{d4} may contain a heteroatom such as O, S, N, and Si. From the viewpoint that the tin-containing catalyst is readily available, and the activity of the tin-containing catalyst as the silanol condensation catalyst (D) is favorable, R^{d3} and R^{d4} are preferably a linear or branched alkyl group having 1 to 30 carbon atoms, and a group represented by the following formula (D3):

-CH=CH-CO-OR^{d6} ··· (D3)

R^{d6} represents a hydrocarbon group having 1 to 30 carbon atoms. The hydrocarbon group may be an aliphatic hydrocarbon group, an aromatic hydrocarbon group, a combination of an aliphatic hydrocarbon group and an aromatic hydrocarbon group. The number of carbon atoms of the hydrocarbon group represented by R^{d6} is preferably 1 to 20. In formula (D2), R^{d5} represents a divalent organic group having 1 to 40 carbon atoms. The number of carbon atoms of the organic group represented by R^{d5} is preferably 1 to 30, more preferably 1 to 10, and even more preferably 1 to 4. The organic group represented by R^{d5} may contain a heteroatom such as O, S, N, and Si. The organic group represented by R^{d5} is preferably a hydrocarbon group, and more preferably -CH=CH-, and -CH₂CH₂-. Preferable specific examples of the compound represented by the above formula (D1), or the oligomer or polymer including the structural unit represented by the above formula (D2) are as described as the specific examples of the dialkyltin dicarboxylates, and dibutyltin diacetate is particularly preferred. Whether the silanol condensation catalyst is neutral or weakly acidic can be determined by measuring the pH at 20°C of a water/acetone = 10/90 solution of the silanol condensation catalyst at a concentration of 1% by mass. Specifically, when the pH is 6.0 or more and less than 8.0, the silanol condensation catalyst is determined to be neutral, whereas when the pH is 3.5 or more and less than 6.0, the silanol condensation catalyst is determined to be weakly acidic. When the resin composition for a foam containing the neutral or weakly acidic silanol condensation catalyst (D) is used, expansion and curing is likely to proceed within a short period of time. Therefore, the resin composition for a foam containing the neutral or weakly acidic silanol condensation catalyst (D) is particularly useful in applying a foam at a jobsite, such as a construction site, a manufacturing site of various industrial products, or the like. This is because the application of the foam at a jobsite requires expansion and curing within a short period of time.

Preferable examples of the basic silanol condensation catalyst (D) include aliphatic primary amines, aliphatic secondary amines, aliphatic tertiary amines, aliphatic unsaturated amines, and aromatic amines, amines other than these amines, and silane coupling agents having an amino group, each of which has been described above. Meanwhile, in the case where the amines and the silane coupling agents having an amino group, as described above, are used as the silanol condensation catalyst alone, the curing reaction of the base resin (A) may be somewhat slow. Therefore, the above-mentioned amines and silane coupling agents having an amino group are preferably used in combination with a catalyst having a high acceleration effect on the curing reaction of the base resin (A), like the above-mentioned various tin-containing catalysts In particular, the basic silanol condensation catalyst (D) is preferably used in combination with a neutral or weakly acidic tin-containing catalyst, more preferably with dialkyltin dicarboxylate, and most preferably with dibutyltin dicarboxylate.

The content of the silanol condensation catalyst (D) is preferably 90 parts by weight or less, more preferably 0.05 parts by weight or more and 80 parts by weight or less, even more preferably 0.05 parts by weight or more and 20 parts by weight or less, and still more preferably 1 part by weight or more and 15 parts by weight or less with respect to 100 parts by weight of the base resin (A). When the content of the silanol condensation catalyst (D) is more than 80 parts by weight, compression of the resultant foam may cause the foam to bottom out. By adjusting the amount of the silanol condensation catalyst, the curability of the resin composition for a foam can be adjusted.

### <Foaming Aid (E)>

The resin composition for a foam preferably contains a foaming aid (E), and/or a silanol condensation catalyst (D) which acts as a foaming aid (E). The foaming aid (E) is a component for accelerating the foaming through the decomposition of the dicarbonate diester (B-1). The foaming aid (E) is not particularly limited as long as it is a compound which accelerates the foaming when added to a mixture containing water and the dicarbonate diester (B-1).

Typically, the foaming aid (E) is preferably exemplified by an organic or inorganic basic compound. Therefore, the basic catalysts described above as the silanol condensation catalyst may act as the foaming aid (E). For example, in the case where the resin composition for a foam contains a component that acts as the foaming aid (E), like the basic silanol condensation catalyst described above as the silanol condensation catalyst (D), the resin composition for a foam is considered to contain both of the silanol condensation catalyst (D) and the foaming aid (E), for convenience.

Preferable examples of the silanol condensation catalyst (D) which acts as the foaming aid (E) include: tertiary amines having no active hydrogen such as bis(N,N-dimethylamino-2-ethyl) ether, triethylenediamine and N,N,N',N'-tetramethylhexamethylenediamine, N-ethylmorpholine, tetramethylethylenediamine, diaminobicyclooctane, 1,2-dimethylimidazole, 1-methylimidazole, 1,8-diazabicyclo-[5.4.0]-7-undecene (DBU), and 1,4-diazabicyclo[2.2.2]octane (DABCO); and tertiary amines containing an active hydrogen which have an active hydrogen-containing group such as a hydroxyl group, a thiol group, or a carboxy group, such as dimethylethanolamine, diethylethanolamine, and dimethylhexanolamine.

The content of the foaming aid (E) that does not fall under the category of the silanol condensation catalyst (D) is preferably 0.05 parts by weight or more and 20 parts by weight or less, more preferably 0.1 parts by weight or more and 10 parts by weight or less, and even more preferably 0.5 parts by weight or more and 5 parts by weight or less with respect to 100 parts by weight of the base resin (A). The content of the silanol condensation catalyst (D) that serves as the foaming aid (E) is similar to the content of the silanol condensation catalyst (D) described above.

### <Other additives>

For the purpose of adjusting the flexibility or molding processability of the foam, a plasticizer, a reactivity regulating agent, and a dye can be added to the resin composition for a foam.

Regarding the plasticizer, a plasticizer having the main chain including a repeating unit formed from an oxyalkylene-based unit is preferred. Specific examples of the main chain include: polyethylene oxide, polypropylene oxide, polybutylene oxide; and random or block copolymers of two or more types selected from ethylene oxide, propylene oxide, and butylene oxide; these may be used alone, or two or more types may be used in combination. Among these, from the viewpoint of compatibility with the base resin (A), polypropylene oxide is preferred. Furthermore, polymers obtained by modifying these oxyalkylenes with an isocyanate can also be added to the resin composition for a foam.

From the viewpoint of the flexibility of the foam thus obtained or the prevention of the plasticizer flowing out of the system, the molecular weight of the plasticizer in terms of number average molecular weight is 1,000 or more, and preferably 3,000 or more. When the number average molecular weight falls within the aforementioned range, the outflow of the plasticizer over time from the system caused by heat, compression or the like can be suppressed, and the initial physical properties can be easily maintained over a long time, while the flexibility is less adversely affected. Furthermore, the upper limit is not particularly limited; however, an excessively high number average molecular weight leads to high viscosity, and deterioration of workability, and therefore the number average molecular weight is preferably 50,000 or less, and more preferably 30,000 or less. Meanwhile, the structure of the plasticizer is not particularly limited, and may be linear or branched as long as the plasticizer can impart flexibility to the foam.

The amount of addition of the plasticizer is preferably 5 parts by weight or more and 150 parts by weight or less, more preferably 10 parts by weight or more and 120 parts by weight or less, and even more preferably 20 parts by weight or more and 100 parts by weight or less with respect to 100 parts by weight of the base resin (A). When the amount of addition of the plasticizer falls within the aforementioned range, the flexibility and the molding processability can be easily adjusted, and a foam having favorable mechanical strength and a desired expansion ratio is likely to be formed. The method for producing the plasticizer is not particularly limited, and any known production method can be applied, and further a commercially available compound may be used as the plasticizer.

The reactivity regulating agent preferably has a reactive silicon group. The reactivity regulating agent may be a silicate compound such as methyl silicate, or ethyl silicate, may be a copolymer of a vinyl monomer having a reactive silicon group, and may be a copolymer formed using a reactive silicon monomer having a chain transfer group such as thiol. These may be used alone, or two or more types may be used in combination.

From the viewpoint of the curing and expansion of the foam thus obtained, the molecular weight of the reactivity regulating agent in terms of number average molecular weight is preferably 1,000 or more, and more preferably 3,000 or more. Furthermore, the upper limit is not particularly limited; however, from the viewpoint that the viscosity of the resin composition for a foam is likely to be set to a range for easy operation, the molecular weight of the reactivity regulating agent is preferably 50,000 or less, and more preferably 30,000 or less. Meanwhile, the structure of the reactivity regulating agent is not particularly limited, and may be linear or branched as long as it can adjust the curability of the resin composition for a foam.

The amount of addition of the reactivity regulating agent is preferably 2 parts by weight or more and 120 parts by weight or less, more preferably 5 parts by weight or more and 80 parts by weight or less, and even more preferably 10 parts by weight or more and 50 parts by weight or less with respect to 100 parts by weight of the base resin (A). When the reactivity regulating agent is used in an amount that falls within such a range, the curability is likely to be adjusted to an appropriate range, the curing is likely to proceed at an appropriate rate, and a foam having a high expansion ratio is likely to be obtained. The method for producing the reactivity regulating agent is not particularly limited, and any known production method can be applied, and further a commercially available compound may be used as the reactivity regulating agent.

In the resin composition for a foam, a light-resistant stabilizer, an ultraviolet absorber, a storage stabilizer, a cell regulating agent, a lubricating agent, a flame retardant and the like may be added as necessary as long as the effects of the present invention are not impaired.

Examples of the light-resistant stabilizer include a hindered phenol-based oxidation inhibitor, and a hindered amine-based light stabilizer that does not include a sulfur atom, a phosphorus atom, a primary amine, and a secondary amine. Here, the light-resistant stabilizer is a compound that has a function of, for example, absorbing light having a wavelength in the ultraviolet region and suppressing the formation of radicals, or a function of capturing radicals formed by light absorption and converting them into thermal energy, and thereby making them harmless, and enhances stability to light.

The ultraviolet absorber is not particularly limited, and examples include benzoxazine-based ultraviolet absorber, benzophenone-based ultraviolet absorber, benzotriazole-based ultraviolet absorber, and triazine-based ultraviolet absorber. Here, the ultraviolet absorber is a compound having a function of absorbing light having a wavelength in the ultraviolet region and suppressing the formation of radicals.

The amount of addition of the light-resistant stabilizer and the ultraviolet absorber are respectively preferably 0.01 parts by weight or more and 5 parts by weight or less, more preferably 0.1 parts by weight or more and 3 parts by weight or less, and even more preferably 0.3 parts by weight or more and 2.0 parts by weight or less with respect to 100 parts by weight of the base resin (A). When the amount of addition of the light-resistant stabilizer and the ultraviolet absorber falls within the above range, an effect of suppressing an increase in surface adhesiveness over time is likely to be exhibited.

Preferred examples of the storage stability improving agent include a compound containing an aliphatic unsaturated bond, an organophosphorus compound, an organosulfur compound, a nitrogen-containing compound, a tin-based compound, and an organic peroxide. These may be used alone, or two or more types may be used in combination. Specifically, examples of the storage stability improving agent include 2-benzothiazolyl sulfide, benzothiazole, thiazole, dimethyl acetylenedicarboxylate, diethyl acetylenedicarboxylate, 2,6-di-t-butyl-4-methylphenol, butylhydroxyanisole, vitamin E, 2-(4-morphodinyldithio)benzothiazole, 3-methyl-1-buten-3-ol, acetylenic unsaturated group-containing organosiloxanes, acetylene alcohol, 3-methyl-1-butyn-3-ol, 2-methyl-3-butyn-2-ol, diallyl fumarate, diallyl maleate, diethyl fumarate, diethyl maleate, dimethyl maleate, 2-pentenenitrile, and 2,3-dichloropropene.

To the resin composition for a foam, a cell regulating agent may be added, if necessary. The type of cell regulating agent is not particularly limited, and examples include inorganic solid powders such as talc, magnesium oxide, titanium oxide, zinc oxide, carbon black, and silica, which are conventionally used. These may be used alone, or two or more types may be used in combination.

The amount of the cell regulating agent used is preferably 0.1 parts by weight or more and 100 parts by weight or less, and more preferably 0.5 parts by weight or more and 50 parts by weight or less with respect to 100 parts by weight of the base resin (A).

To the resin composition for a foam, a foam stabilizer may be added, if necessary. The type of foam stabilizer is not particularly limited, and examples include a silicone oilbased compound such as polyether-modified silicone oil, and fluorine-based compounds, which are conventionally used. These may be used alone, or two or more types may be used in combination. In particular, polypropylene-modified and polyethylene-modified silicones may be expected to exhibit foam stabilizing power even in a small amount.

The amount of the foam stabilizer used is preferably 0.2 parts by weight or more and 30 parts by weight or less, and more preferably 0.5 parts by weight or more and 15 parts by weight or less with respect to 100 parts by weight of the base resin (A).

To the resin composition for a foam, hollow particles may be added, if necessary. The type of the hollow particles is not particularly limited, and examples include particles in which a thermoplastic shell polymer encapsulates a volatile liquid that is converted to a gas phase at a temperature lower than or equal to the softening point of the shell polymer, and the volatile liquid that has been heated is converted to a gas phase, while the shell polymer is softened and expanded, and are conventionally used. Furthermore, it is also possible to add hollow particles before expansion, and to expand the hollow particles at the time of molding.

The amount of the hollow particles used is preferably 0.2 parts by weight or more and 30 parts by weight or less, and more preferably 0.5 parts by weight or more and 15 parts by weight or less with respect to 100 parts by weight of the base resin (A).

Further, for the purpose of enhancing the compatibility of the resin composition for a foam containing the base resin (A), the chemical foaming agent (B), and water (C), a lubricating agent may be added.

When the resin composition for a foam contains the lubricating agent, friction or self-adhesiveness in the foaming cells of the foam formed by expanding the resin composition for a foam is reduced, and a foam having the desired flexibility can be obtained. Furthermore, the lubricating agent is retained in a three-dimensional network structure formed by the silanol condensation reaction between the base resin (A), and tends to be inhibited from bleeding out of the foam, which makes it possible to maintain the flexibility of the foam for a long period of time.

Regarding the lubricating agent, a liquid lubricating agent is preferred. Specific examples of the liquid lubricating agent include paraffinic mineral oil, naphthenic mineral oil, animal and vegetable oils such as fatty acid glycerides; olefinic lubricating agents having an alkyl structure such as poly-1-decene, and polybutene; alkylaromatic compound-based lubricating agents having an aralkyl structure; polyalkylene glycol-based lubricating agents; ether-based lubricating agents such as polyalkylene glycol ethers, perfluoropolyether, and polyphenyl ether; ester-based lubricating agents having an ester structure such as a fatty acid ester, a fatty acid diester, a polyol ester, a silicic acid ester, and a phosphoric acid ester; silicone-based lubricating agents such as dimethylsilicone (that is, two-terminal trimethylsiloxy group-blocked dimethylpolysiloxane), and silicone oil in which a part of the methyl groups of dimethylsilicone have been substituted by a polyether group, a phenyl group, an alkyl group, an aralkyl group, a fluorinated alkyl group, or the like; and fluorine atom-containing lubricating agents such as chlorofluorocarbons. These may be used alone, or two or more types may be used in combination.

Among these lubricating agents, the silicone-based lubricating agents are particularly preferred from the viewpoint of a decrease in the coefficient of friction in the foaming cells, as well as dispersibility, processability, safety and the like.

The amount of addition of the lubricating agent is preferably 1 part by weight or more, more preferably 2 parts by weight or more, and even more preferably 3 parts by weight or more with respect to 100 parts by weight of the base resin (A). The upper limit of the amount of addition of the lubricating agent is not particularly limited, but is preferably 25 parts by weight or less, and more preferably 20 parts by weight or less. When the lubricating agent is used in an amount that falls within such a range, friction or self-adhesiveness in the foaming cells may be easily suppressed, the expansion ratio can be easily increased, and bleed-out of the lubricating agent from the system can be easily suppressed, whereby a foam having the desired flexibility can be easily obtained.

Suitable specific examples of the flame retardant include red phosphorus, a phosphoric acid ester, a phosphoric acid salt-containing flame retardant, a bromine-containing flame retardant, a boron-containing flame retardant, an antimony-containing flame retardant, and a metal hydroxide. These may be used alone, or two or more types may be used in combination. With regard to the flame retardant, it is preferred that a combination of red phosphorus and at least one selected from a phosphoric acid ester, a phosphoric acid salt-containing flame retardant, a bromine-containing flame retardant, a boron-containing flame retardant, an antimony-containing flame retardant, and a metal hydroxide is used.

Since foaming is likely to occur in an environment in which the chemical foaming agent (B) and water (C) coexist, the resin composition for a foam may be used in the form of a multi-liquid type liquid composition including two liquids or three or more liquids type. Since the preparation of the resin composition for a foam by mixing is easy, the resin composition for a foam is preferably a two-liquid type resin composition.

The multi-liquid type resin composition preferably includes a first liquid that contains the base resin (A) and the dicarbonate ester (B-1), and a second liquid that at least contains the silanol condensation catalyst (D). Furthermore, it is also preferred that the second liquid contains water (C). In the case where the silanol condensation catalyst (D) is contained in the first liquid, curing by crosslinking the base resin (A) may occur. However, when the silanol condensation catalyst (D) is contained in a liquid other than the first liquid, the curing of the base resin (A) before production of a foam can be prevented. In the case where the second liquid contains the silanol condensation catalyst (D), the silanol condensation catalyst (D) preferably contains a neutral or weakly acidic silanol condensation catalyst, and more preferably a weakly acidic silanol condensation catalyst.

Furthermore, in the multi-liquid type resin composition, the foaming aid (E), and/or the silanol condensation catalyst (D) which acts as a foaming aid (E) are contained in the second liquid containing the silanol condensation catalyst (D), or a liquid other than the first liquid and the second liquid.

### <<Foam>>

A foam is obtained by expanding and curing the resin composition for a foam described thus far according to a routine method. Uses of the above-mentioned foam are not particularly limited. The above-mentioned foam can be suitably used in applications in which various conventionally known foams such as polyurethane foams and polystyrene foams are applied.

Since the above-mentioned foam is formed using the resin composition for a foam which contains specific components described above, the foam can be produced by expansion and curing at low temperatures within a short period of time, even when the resin composition for a foam contains no water, or when the content of water in the resin composition for a foam is small. Also when the above-mentioned foam is produced in a continuous process, the foam is manufactured by expansion and curing within a short period of time while a sufficient time period is allowed before the shape of the resin composition for a foam reaches a predetermined shape; therefore, the foam can be stably manufactured as a foam that is uniform in shape and density and having a high expansion ratio.

The shape of the foam is not particularly limited. Examples of the shape of the foam include a sheet shape, a rod shape, a regular polyhedron shape (for example, a cuboidal shape, a regular tetrahedral shape, and a regular octahedral shape), a discoid shape, a spherical shape, a hemispherical shape, and an irregular shape. From the viewpoint that the form can be preferably produced in a continuous process, the shape of the foam is preferably a sheet shape, or a rod shape. Meanwhile, the rod shape refers to a shape in a resting state. Since the foam is flexible, the rod-shaped foam in a resting state may behave as a string when moved.

The density of the foam is not particularly limited. The density of the foam is determined as appropriate according to the use of the foam and/or the performance required for the foam. For example, the density of the foam is preferably 900 kg/m³ or less, more preferably 500 kg/m³ or less, even more preferably 200 kg/m³ or less, and particularly preferably 150 kg/m³ or less. When the density falls within the above range, the foam is lightweight and easy to routinely carry around, the application of the foam to buildings and attachment of the foam to various articles, and the like is easy. The lower limit of the density of the foam is not particularly limited. For example, the density of the foam is preferably 10 kg/m³ or more, and more preferably 70 kg/m³ or more.

The hardness of the foam is not particularly limited. The hardness of the foam is determined as appropriate according to the use of the foam and/or the performance required for the foam. The hardness of the foam in terms of ASKER FP hardness as measured at 23°C is preferably 50 or less, more preferably 15 or less, and even more preferably 10 or less.

The foam described thus far can be used in a variety of applications. The foam described thus far can be suitably utilized, for example, as a soundproof material, a damping material, a cushioning material or the like, in applications including transportation equipment, bedclothes and beddings, furniture, various types of equipment, construction materials, packaging materials, and medicine and nursing.

With regard to preferred applications, examples of transportation equipment use include: cushioning materials as well as skin materials and skin lining materials for seats, child sheets, head rests, arm rests, foot rests, head liners for automobiles, construction machines, railroad vehicles, ships and aircrafts, and the like; saddles and rider cushions for motorbikes, bicycles, and the like; bed mats for custom cars; cushions for camping cars, and the like; core materials as well as skin materials and skin lining materials for ceiling materials, handles, door trims, instrument panels, dashboards, door panels, pillars, console boxes, quarter trims, sun visors, flexible containers, front mirrors, harnesses, dust covers, and the like; damping, sound-absorbing materials such as floor cushions, shock-absorbing materials such as helmet linings, crash pads, and center pillar garnishes, energy absorption bumpers, guard soundproof materials, and sponges for vehicle waxing.

Examples of bedclothes, bed and bedding uses include cushioning materials as well as skin materials and skin lining materials for pillows, comforters, futon mattresses, beds, mattresses, bed mats, bed pads, cushions, baby beds, neck pillows for babies, and the like.

Examples of furniture uses include cushioning material as well as skin materials and skin lining materials for chairs, seat chairs, floor cushions, sofas, various other cushions such as sofa cushions and seat cushions, carpets and mats, futon mattresses and comforters for kotatsu, toilet seat mats, and the like.

Examples of various equipment uses include sealing materials or shock-absorbing materials for liquid crystals, electronic components, and the like, skins for robots, electroconductive cushioning materials, antistatic cushioning materials, and pressure sensitive materials.

Examples of construction material uses include heat insulating materials for floors and roofs and impact absorbing materials for floors and walls. Examples of packaging material uses include packing materials such as shock-absorbing materials, cushioning materials, and impact absorbing materials. With regard to medicine and nursing uses, the foam can be utilized for cell sheets for regeneration medicines, artificial skins, artificial bones, artificial cartilage, artificial organs, and other biocompatible materials, liquid drug exudation pads, hemostatic pads, gas-liquid separation filters (indwelling needle filters), poultices, medical liquid absorbing tools, masks, compression pads, disposable products for operation, electrode pads for low frequency therapy equipment, nursing goods such as bedsore preventive mattresses, position changing cushions, cushions for wheelchairs, seats for wheelchairs, shower chairs, pillows for bathing care, palm protectors for contracture, tapings, liners for plaster casts, liners for artificial limbs and artificial legs, denture stands, dental goods other than denture stands; impact absorbing pads, hip protectors, elbow and knee protectors, and vulnerary covering materials.

In addition, the following applications can be listed by way of example.

Examples of various washing sponge uses include cleaners for house cleaning, cleaners for dish washing, cleaners for body washing, shoe polishing cleaners, and cleaners for car washing. Examples of toiletry uses include absorbent materials such as diapers and sanitary napkins, or side gathers, and various liquid filters.

Examples of footwear uses include skin materials for shoes, lining, insoles, shoe sore preventing pads, various shoe pads, inner boots, slippers, slipper cores, sandals, and sandal insoles.

Examples of cosmetic tool uses include cosmetic puffs and eye color tips. Examples of miscellaneous uses include bathtub goods such as bath pillows, massage puffs, mouse pads, arm rests for keyboards, non-slip cushions, stationeries (pengrips, infiltration stamping members), small pillows for desks, earplugs, cotton swabs, hot pack sheets, cold pack sheets, poultices, eyeglass pads, pads for swimming goggles, face protectors, wristwatch pads, headphone ear pads, earphones, ice pillow covers, core materials and cushioning materials as well as skin materials and skin lining materials for folding pillows, double-sided tape base materials, adsorption media for fragrances, and inking pads.

Examples of clothing uses include pad materials such as shoulder pads and brassier pads, liners for cold protection materials, and heat insulating materials.

Examples of sports uses include: cushioning materials as well as skin materials and skin lining materials for sports protectors, mats for bouldering (climbing and mini-rock climbing of combining rocks 2 to 3 m high), kickboards, cushioning materials for high jump, landing mats for gymnastics, sports and kids mats, and liners for ski boots, snowboard boots, and the like.

Examples of toy and plaything uses include: cushioning materials and fillers as well as skin materials and skin lining materials for hand exercisers, healing goods, key holders, stuffed dolls, mannequin bodies, balls, and massage balls; specially shaped objects such as decorations and monsters; casting materials for producing molds or models of various shapes, and the like; mold materials for producing shapes of articles in casting; materials for producing sample models with a mold; materials for decoration production; and production of special molded products of monsters and products therefrom.

### <<Method for Producing Foam>>

A method for producing a foam is not particularly limited as long as the resin composition for a foam described above is used. The method for producing a foam may be, for example, a batch-wise process in which the resin composition for a foam is charged into a mold, and thereafter expansion and curing are performed in the mold, or a continuous process in which expansion and curing of the resin composition for a foam is continuously performed on a continuously moving belt-like support. Nonwoven fabrics may be used as the support.

Furthermore, the above-mentioned resin composition for a foam may be prepared completely as a liquid, or as a low-viscosity composition that contains only a small amount of insolubles such as pigment (for example, carbon black), by using the dicarbonate diester (B-1) as the chemical foaming agent (B). In the case where the resin composition for a foam has a low viscosity, one-liquid resin composition for a foam, or a multi-liquid type resin composition for a foam including two or more liquids is discharged onto a working surface, and is subjected to collisional mixing on the working surface, whereby a film-like foam can be formed on the working surface.

The foam is typically produced through a method including a mixing step of mixing a first liquid containing the base resin having a reactive silicon group (A) and the dicarbonate diester (B-1), with the silanol condensation catalyst (D) to obtain a mixed liquid. In this method, the rate of foaming effected by decomposition of the dicarbonate diester (B-1) and the rate of reaction of the curing of the mixed liquid effected by the reaction between the reactive silicon groups are each adjusted in the mixed liquid such that a foam having an expansion ratio of 2-fold or more and 60-fold or less is obtained.

The rate of foaming effected by the decomposition of the dicarbonate diester (B-1) can be adjusted, for example, by changing as appropriate the type and amount used of the dicarbonate diester (B-1), the content of water (C) in the mixed liquid, the temperature of an environment in which the foam is produced, and the type and content of the foaming aid (E) and/or the silanol condensation catalyst (D) which acts as a foaming aid (E) in the mixed liquid, and the like. The rate of curing reaction of the mixed liquid can be adjusted, for example, by changing as appropriate the type and amount of the reactive silicon included in the base resin (A), the type and content of the silanol condensation catalyst (D) in the mixed liquid, the content of water (C) in the mixed liquid, and the temperature of the environment in which the foam is produced, and the like. The rate of foaming effected by the decomposition of the dicarbonate diester (B-1) and the rate of curing reaction of the mixed liquid are adjusted such that the foam obtained has an expansion ratio of preferably 2-fold or more and 60-fold or less, and more preferably 5-fold or more and 40-fold or less.

In the above-mentioned production method, the amount of dicarbonate diester (B-1) used and the amount of silanol condensation catalyst (D) used are as described above in connection with the composition. The amount of dicarbonate diester (B-1) used is preferably 1 part by weight or more and 50 parts by weight or less, more preferably 2 parts by weight or more and 40 parts by weight or less, and particularly preferably 5 parts by weight or more and 30 parts by weight or less with respect to 100 parts by weight of the base resin (A). The amount of silanol condensation catalyst (D) used is preferably 0.05 parts by weight or more and 20 parts by weight or less, and more preferably 1 part by weight or more and 15 parts by weight or less with respect to 100 parts by weight of the base resin (A).

In the mixing step described above, the foaming aid (E), and/or the silanol condensation catalyst (D) which acts as a foaming aid (E) are preferably mixed into the first liquid. As the silanol condensation catalyst (D) which acts as a foaming aid (E), 1,4-diazabicyclo[2.2.2]octane is preferred.

The temperature for curing and expanding the resin composition for a foam is not particularly limited. For example, the temperature for curing and expanding the resin composition for a foam is preferably -10°C or higher and 40°C or lower, and more preferably 0°C or higher and 37°C or lower. Under such temperature conditions, production of a foam using the resin composition for a foam at a jobsite where the foam is used is easy. The time period required for completion of the curing and expansion is not particularly limited. For example, the time period is preferably 12 minutes or shorter, and more preferably 10 minutes or shorter.

The foam produced in this way is preferably dried, and thereafter distributed and sold as a foam product. The conditions of the temperature and the time period for drying are not particularly limited as long as water, an alcohol or the like which originates from the resin composition for a foam or is co-produced in the curing reaction is reduced to a desired extent. The drying condition may be, for example, an atmosphere of about 80°C and about 1 hour. Furthermore, the conditions of the temperature and the time period for drying may be, for example, an atmosphere of about 60°C and about 12 hours. However, as described above, in the case where only the dicarbonate diester is used as the chemical foaming agent (B), and the amount of water (C) used is set to be low, the foam may be qualified as a product without drying.

### EXAMPLES

Hereinafter, the present invention will be described in more detail by way of Examples; however, the present invention is not intended to be limited to these Examples. Meanwhile, unless stated otherwise, the units "parts" and "percent (%)" in Examples and Comparative Examples represent "parts by weight" and "percent (%) by weight".

### [Synthesis Example 1]

### <Polymer A>

Polymerization of propylene oxide was carried out using a zinc hexacyanocobaltate glyme complex catalyst and polyoxypropylene triol having a molecular weight of about 3,000 as an initiator, to obtain hydroxy group-terminated polyoxypropylene having a number average molecular weight of 16,400 (a polystyrene-equivalent molecular weight as measured using HLC-8120GPC manufactured by Tosoh Corporation as a liquid feeding system, TSK-GEL H type manufactured by Tosoh Corporation as a column, and THF as a solvent). Subsequently, a methanol solution of NaOMe in an amount of 1.2 times equivalent with respect to the hydroxy groups of this hydroxy group-terminated polyoxypropylene was added, then methanol was distilled off, and 1.5 times equivalent of 3-chloro-1-propene was further added to convert the terminal hydroxy groups to allyl groups. Next, to 100 parts by weight of the allyl group-terminated polyoxypropylene polymer obtained, 36 ppm of a platinum-divinyldisiloxane complex (a 3% by weight isopropyl alcohol solution in terms of platinum) was added. While the mixture was stirred, 3.3 parts by weight of triethoxysilane was slowly added dropwise thereto, and the mixture was reacted for 2 hours at 90°C. Furthermore, 30 parts by weight of methanol and 12 ppm of HCl were added to the mixture to thereby convert the terminal ethoxy groups to methoxy groups, and then excess methanol was removed. Thus, a reactive silicon group-containing branched polyoxypropylene having 2.1 trimethoxysilyl groups per molecule at the terminals was obtained.

### [Synthesis Example 2]

### <Polymer B>

### (Preliminary Step)

Into a three-neck flask were charged 707 parts by weight of n-butyl acrylate, 108 parts by weight of ethyl acrylate, and 186 parts by weight of stearyl acrylate and these were homogeneously mixed to obtain an A solution. Into another vessel equipped with a stirrer were charged 0.018 parts by weight of copper (II) bromide (CuBr₂) (5 ppm by weight with respect to the weight of the A solution), 0.018 parts by weight of hexamethyltris(2-aminoethyl)amine, and 0.61 parts by weight of methanol, and the contents of the vessel were stirred under a nitrogen atmosphere, to prepare a homogeneous solution. In still another vessel equipped with a stirrer, 27.8 parts by weight of methanol, 1 part by weight of ascorbic acid, and 1.2 parts by weight of triethylamine were stirred for 30 minutes under a nitrogen atmosphere, to obtain a homogeneous solution.

### ¥(First Step)

While the jacket temperature of a jacketed polymerization reactor was set to 55°C, 154 parts by weight of methanol, 5.8 parts by weight of ethyl α-bromobutyrate, and 14.8 parts by weight of 3-methacryloxypropyltrimethoxysilane, 20% of the A solution obtained in the preliminary step, and the copper(II) bromide-containing solution obtained in the preliminary step were charged into the polymerization reactor, and the contents of the polymerization reactor was stirred for 30 minutes under a nitrogen atmosphere, to make a homogeneous solution. Then, while the solution obtained was heated to 50°C, the ascorbic acid-containing solution obtained in the preliminary step was added dropwise to the polymerization reactor such that the rate of addition of ascorbic acid was 0.080 parts by weight per hour, to thereby initiate the polymerization reaction. Heat generation took place with the progress of the dropwise addition of ascorbic acid, and after heat generation reached its maximum, the heat generation decreased gradually. When the internal temperature of the polymerization reactor lowered to a temperature higher by 2°C than the temperature of the jacket, the polymerization solution was sampled. The sampled solution was analyzed using a gas chromatograph, and it was confirmed that 81% by weight of the components in the A solution had disappeared.

### (Second Step)

The remaining 80% of the A solution was added dropwise to the polymerization reactor over 90 minutes. After the completion of the dropwise addition, polymerization was carried out until 98% by weight of the components in the A solution disappeared as determined by analysis using a gas chromatograph.

### (Third Step)

To the polymerization reactor 16.3 parts by weight of 3-methacryloxypropyltrimethoxysilane was added. Then, the dropwise addition of the ascorbic acid-containing solution obtained in the preliminary step to the polymerization reactor was resumed, and the dropwise addition was terminated upon elapse of 1.5 hours after the resumption of the dropwise addition, to thereby terminate polymerization. After the temperature of the jacket of the polymerization reactor was changed to 80°C, the pressure inside the polymerization reactor was reduced, to remove volatile components in the polymerization reactor. After the removal of the volatile components, the jacket temperature of the polymerization reactor was changed to 60°C.

### (Purification)

After addition of 1,000 parts by weight of butyl acetate to the polymerization reactor, stirring was carried out until the polymer in the polymerization reactor was homogeneously dissolved. To the polymer solution obtained were added 10 parts by weight of an adsorbent (KYOWAAD 500SH, manufactured by Kyowa Chemical Industry Co., Ltd.) and 10 parts by weight of an adsorbent (KYOWAAD 700SEN-S, manufactured by Kyowa Chemical Industry Co., Ltd.). Then, the polymer solution was stirred with heating at 100°C. After stirring, the polymer solution was cooled to a temperature of 60°C or lower. The total amount of the adsorbents was filtered off from the polymer solution containing the adsorbents, to obtain a clear polymer solution. Volatile components were removed from the clear polymer solution at 100°C under reduced pressure conditions, and thus a purified polymer B was obtained. The polymer obtained is an acrylic resin having a reactive silicon group.

### [Synthesis Example 3]

### <Polymer C>

Polymerization of propylene oxide was carried out using a zinc hexacyanocobaltate glyme complex catalyst and polyoxypropylene diol having a molecular weight of about 3,000 as an initiator, to obtain hydroxy group-terminated polyoxypropylene having a number average molecular weight of 28,500 (a polystyrene-equivalent molecular weight as measured using HLC-8120GPC manufactured by Tosoh Corporation as a liquid feeding system, TSK-GEL H type manufactured by Tosoh Corporation as a column, and THF as a solvent). Subsequently, a methanol solution of NaOMe in an amount of 1.2 times equivalent with respect to the hydroxy groups of this hydroxy group-terminated polyoxypropylene was added and methanol was distilled off, then 1.5 times equivalent of 3-chloro-1-propene was further added to convert terminal hydroxy groups to allyl groups. Next, to 100 parts by weight of the allyl group-terminated polyoxypropylene polymer obtained, 36 ppm of a platinum-divinyldisiloxane complex (a 3% by weight isopropyl alcohol solution in terms of platinum) was added. While the mixture was stirred, 1.2 parts by weight of triethoxysilane was slowly added dropwise, and the mixture was reacted for 2 hours at 90°C. Furthermore, 30 parts by weight of methanol and 12 ppm of HCl were added to the mixture to thereby convert the terminal ethoxy groups to methoxy groups, and then excess methanol was removed. Thus, a reactive silicon group-containing linear polyoxypropylene having 2.1 trimethoxysilyl groups per molecule at the terminals was obtained.

### [Synthesis Example 4]

### <Polymer D>

Polymerization of propylene oxide was carried out using a zinc hexacyanocobaltate glyme complex catalyst and polyoxypropylene triol having a molecular weight of about 3,000 as an initiator, to obtain hydroxy group-terminated polyoxypropylene having a number average molecular weight of 16,400 (a polystyrene-equivalent molecular weight as measured using HLC-8120GPC manufactured by Tosoh Corporation as a liquid feeding system, TSK-GEL H type manufactured by Tosoh Corporation as a column, and THF as a solvent). Subsequently, a methanol solution of NaOMe in an amount of 1.2 times equivalent with respect to the hydroxy groups of this hydroxy group-terminated polyoxypropylene was added and methanol was distilled off, then 1.5 times equivalent of 3-chloro-1-propene was further added to convert terminal hydroxy groups to allyl groups. Next, to 100 parts by weight of the allyl group-terminated polyoxypropylene polymer obtained, 36 ppm of a platinum-divinyldisiloxane complex (a 3% by weight isopropyl alcohol solution in terms of platinum) was added. While the mixture was stirred, 1.2 parts by weight of diethoxymethylsilane was slowly added dropwise thereto, and the mixture was reacted for 2 hours at 90°C. Furthermore, 30 parts by weight of methanol and 12 ppm of HCl were added to the mixture to thereby convert the terminal ethoxy groups to methoxy groups, and then excess methanol was removed. Thus, a reactive silicon group-containing branched polyoxypropylene having 1.5 dimethoxymethylsilyl groups per molecule at the terminals was obtained.

### [Synthesis Example 5]

### <Polymer E>

Polymerization of propylene oxide was carried out using a zinc hexacyanocobaltate glyme complex catalyst and polyoxypropylene glycol having a number average molecular weight about 2,000 as an initiator, to obtain hydroxy group-terminated polyoxypropylene having a number average molecular weight of 27,900 (a polystyrene-equivalent molecular weight as measured using HLC-8120GPC manufactured by Tosoh Corporation as a liquid feeding system, TSK-GEL H type manufactured by Tosoh Corporation as a column, and THF as a solvent). Subsequently, a methanol solution of NaOMe in an amount of 1.05 times equivalent with respect to the hydroxyl groups of this hydroxy group-terminated polyoxypropylene was added, then methanol was distilled off, and 1.16 times equivalent of propargyl bromide was further added to convert terminal hydroxyl groups to propargyl groups. The unpurified, propargyl group-terminated polyoxypropylene obtained was mixed with n-hexane and water, followed by stirring, and thereafter water was removed by centrifugation, and hexane was devolatilized under reduced pressure from the hexane solution obtained, to thereby remove metal salts in the polymer. Thus, polyoxypropylene having propargyl groups at the terminal sites was obtained. To 500 g of this polymer 150 µL of a platinum-divinyldisiloxane complex (a 3% by weight isopropyl alcohol solution in terms of platinum) and 8.37 g of trimethoxysilane were added. After reaction at 90°C for 2 hours, unreacted trimethoxysilane was distilled off under a reduced pressure, to thereby obtain polyoxypropylene having a number average molecular weight of 28,500 and trimethoxysilyl groups at the terminals. Such polyoxypropylene has a terminal structure formed by addition of trimethoxysilane to the propargyl group. The polyoxypropylene obtained was revealed to have 2.0 trimethoxysilyl groups, on average, per molecule.

### [Preparation Example 1]

### <Polymer G>

Sixty parts by weight of the polymer A, 40 parts by weight of a copolymer of methyl methacrylate (MMA), 2-ethylhexyl acrylate (2EHA), stearyl methacrylate (SMA), 3-(trimethoxysilyl)propyl methacrylate (TSMA), and (3-mercaptopropyl)trimethoxysilane (A189Z), and 27 parts by weight of isobutyl alcohol, which was a solvent for the copolymer, were degassed and homogeneously mixed using a rotary evaporator, to obtain polymer G which was a blend of the reactive silicon group-containing polyoxypropylene and the acrylic resin and had a solid content of 100%. The copolymerization proportion (mass ratio) of the copolymer was 65/24/1/10/8 as expressed as MMA/2EHA/SMA/TSMA/A189Z. Furthermore, the glass transition temperature of the copolymer was 43°C. The number average molecular weight of the polymer was 2,200 (a polystyrene-equivalent molecular weight as measured using HLC-8120GPC manufactured by Tosoh Corporation as a liquid feeding system, TSK-GEL H type manufactured by Tosoh Corporation as a column, and THF as a solvent).

### [Preparation Example 2]

### <Polymer H>

Sixty parts by weight of the polymer A, 40 parts by weight of a copolymer of methyl methacrylate (MMA), butyl acrylate (BA), 2-ethylhexyl acrylate (2EHA), stearyl methacrylate (SMA), 3-(trimethoxysilyl)propyl methacrylate (TSMA), tert-butyl methacrylate (tBMA), and (3-mercaptopropyl)trimethoxysilane (A189Z), and 27 parts by weight of isobutyl alcohol, which was a solvent for the copolymer, were degassed and homogeneously mixed using a rotary evaporator, to obtain polymer H which was a blend of the reactive silicon group-containing polyoxypropylene and the acrylic resin and had a solid content of 100%. The copolymerization proportion (mass ratio) of the copolymer was 64/0.3/0.3/10/10/15/7.2 as expressed as MMA/BA/2EHA/SMA/TSMA/tBMA/A189Z. Furthermore, the glass transition temperature of the copolymer was 70°C. The number average molecular weight of the polymer was 2,300 (a polystyrene-equivalent molecular weight as measured using HLC-8120GPC manufactured by Tosoh Corporation as a liquid feeding system, TSK-GEL H type manufactured by Tosoh Corporation as a column, and THF as a solvent).

### [Example 1]

One hundred parts by weight of a base resin (A) [polymer A] and 20 parts by weight of a dicarbonate diester (B-1) [diethyl dicarbonate: manufactured by FUJIFILM Wako Pure Chemical Corporation] were added and sufficiently mixed, and thus a first liquid was produced. To 120 parts by weight of this first liquid, 2 parts by weight of a foam stabilizer [TEGOSTAB BF2470: manufactured by Evonik Japan Co Ltd.], 4 parts by weight of water (C), 1.6 parts by weight of a silanol condensation catalyst (D) [NEOSTANN U220H (dibutyltin diacetylacetonate): manufactured by Nitto Kasei Co., Ltd.], and 8 parts by weight of a silanol condensation catalyst [DBU (1,8-diazabicyclo[5.4.0]-7-undecene)] were added, then formulated in a volumetrically graduated plastic cup at room temperature (an atmosphere of 23°C) so as to attain a total volume of 10 cc, and manually stirred with a spatula 10 mm wide for 10 seconds, to thereby cause expansion. The expansion ratio after 5 minutes from the start of stirring and the density of the foam are shown in Table 1.

### [Example 2]

The preparation of a foam was performed in a similar manner to Example 1 except that 4 parts by weight of a black pigment [Asahi Thermal: manufactured by Asahi Carbon Co., Ltd.] was added to the first liquid. The expansion ratio after 5 minutes from the start of stirring and the density of the foam are shown in Table 1.

### [Example 3]

The preparation of a foam was performed in a similar manner to Example 2 except that the amount of the black pigment [Asahi Thermal manufactured by Asahi Carbon Co., Ltd.] used was changed to 2 parts by weight, the amount of the dicarbonate diester (B-1) [diethyl dicarbonate: manufactured by FUJIFILM Wako Pure Chemical Corporation] used was changed to 10 parts by weight, and the amount of water (C) used was changed to 2 parts by weight. The expansion ratio after 5 minutes from the start of stirring and the density of the foam are shown in Table 1.

### [Example 4]

The preparation of a foam was performed in a similar manner to Example 3 except that water (C) was not used. The expansion ratio after 5 minutes from the start of stirring and the density of the foam are shown in Table 1.

### [Example 5]

The preparation of a foam was performed in a similar manner to Example 3 except that the silanol condensation catalyst (D) [NEOSTANN U220H (dibutyltin diacetylacetonate): manufactured by Nitto Kasei Co., Ltd.] was changed to a silanol condensation catalyst (D) [NEOSTANN U200 (dibutyltin diacetate): manufactured by Nitto Kasei Co., Ltd.]. The expansion ratio after 5 minutes from the start of stirring and the density of the foam are shown in Table 1.

### [Example 6]

One hundred parts by weight of a base resin (A) [polymer B], 10 parts by weight of a dicarbonate diester (B-1) [diethyl dicarbonate: manufactured by FUJIFILM Wako Pure Chemical Corporation], and 2 parts by weight of water (C) were added and sufficiently mixed, and thus a first liquid was produced. To 112 parts by weight of this first liquid, 2 parts by weight of a foam stabilizer [TEGOSTAB BF2470: manufactured by Evonik Japan Co Ltd.], 6 parts by weight of a silanol condensation catalyst (D) [NEOSTANN U200 (dibutyltin diacetate): manufactured by Nitto Kasei Co., Ltd.], and 1.2 parts by weight of a silanol condensation catalyst [DABCO (1,4-diazabicyclo[2.2.2]octane)] were added, and thus a foam was prepared in a similar manner to Example 1. The expansion ratio after 5 minutes from the start of stirring and the density of the foam are shown in Table 1.

### [Example 7]

One hundred parts by weight of a base resin (A) [polymer A], 10 parts by weight of a dicarbonate diester (B-1) [diethyl dicarbonate: manufactured by FUJIFILM Wako Pure Chemical Corporation], and 2 parts by weight of water (C) were added and sufficiently mixed, and thus a first liquid was produced. To 112 parts by weight of this first liquid, 2 parts by weight of a foam stabilizer [TEGOSTAB BF2470: manufactured by Evonik Japan Co Ltd.], 6 parts by weight of a silanol condensation catalyst (D) [NEOSTANN U200 (dibutyltin diacetate): manufactured by Nitto Kasei Co., Ltd.], and 4 parts by weight of a silanol condensation catalyst [DABCO (1,4-diazabicyclo[2.2.2]octane)] were added, and thus a foam was prepared in a similar manner to Example 1. The expansion ratio after 5 minutes from the start of stirring and the density of the foam are shown in Table 1.

### [Example 8]

The preparation of a foam was performed in a similar manner to Example 7 except that in the first liquid, the base resin (A) was changed from polymer A to polymer C, and the amount of water (C) was changed from 2 parts by weight to 4 parts by weight. The expansion ratio after 5 minutes from the start of stirring and the density of the foam are shown in Table 1.

### [Example 9]

The preparation of a foam was performed in a similar manner to Example 8 except that the base resin (A) was changed from polymer C to polymer D. The expansion ratio after 5 minutes from the start of stirring and the density of the foam are shown in Table 2.

### [Example 10]

The preparation of a foam was performed in a similar manner to Example 8 except that the base resin (A) was changed from 100 parts by weight of polymer C to 80 parts by weight of polymer A and 20 parts by weight polymer G. The expansion ratio after 5 minutes from the start of stirring and the density of the foam are shown in Table 2.

### [Example 11]

The preparation of a foam was performed in a similar manner to Example 10 except that in the first liquid, the amount of water (C) was changed from 4 parts by weight to 2 parts by weight, and the amount of the silanol condensation catalyst [DABCO (1,4-diazabicyclo[2.2.2]octane)] was changed from 4 parts by weight to 1.2 parts by weight. The expansion ratio after 5 minutes from the start of stirring and the density of the foam are shown in Table 2.

### [Example 12]

The preparation of a foam was performed in a similar manner to Example 10 except that water (C) was not used in the first liquid. The expansion ratio after 5 minutes from the start of stirring and the density of the foam are shown in Table 2.

### [Example 13]

The preparation of a foam was performed in a similar manner to Example 11 except that polymer G was changed to polymer H. The expansion ratio after 5 minutes from the start of stirring and the density of the foam are shown in Table 2.

### [Example 14]

The preparation of a foam was performed in a similar manner to Example 11 except that the base resin (A) was changed from a mixture of polymer A and polymer G to polymer E. The expansion ratio after 5 minutes from the start of stirring and the density of the foam are shown in Table 2.

### [Example 15]

The preparation of a foam was performed in a similar manner to Example 11 except that the base resin (A) was changed from a mixture of polymer A and polymer G to polymer F (dimethoxy(methyl)silylmethyl carbamate-terminated polyether; GENIOSIL (registered) STPE-10 manufactured by WACKER CHEMIE AG). The expansion ratio after 5 minutes from the start of stirring and the density of the foam are shown in Table 2.

### [Comparative Example 1]

One hundred parts by weight of a base resin (A) [polymer A], 27 parts by weight of a carbonate or bicarbonate (B-2) [sodium hydrogencarbonate: FE-507, manufactured by Eiwa Chemical Ind. Co., Ltd.], 5 parts by weight of a black pigment [Asahi Thermal manufactured by Asahi Carbon Co., Ltd.], and 3 parts by weight of an oxidation inhibitor [PUR68: manufactured by BASF SE] were added and sufficiently mixed, and thus a first liquid was produced. Thirty-seven parts by weight of an acidic compound (B-3) [salicylic acid (pKa: 2.97): first grade salicylic acid manufactured by Kishida Chemical Co., Ltd.], 2 parts by weight of a foam stabilizer [TEGOSTAB B8123: manufactured by Evonik Japan Co Ltd.], 10 parts by weight of a silanol condensation catalyst (D) [2-ethyl acid phosphate (acidic phosphoric acid ester, JP-502), manufactured by Johoku Chemical Co., Ltd.], and 12 parts by weight of water (C) were added and sufficiently mixed, and thus a second liquid was produced.

The first liquid and second liquid obtained were formulated in a volumetrically graduated plastic cup at room temperature (an atmosphere of 23°C) so as to attain a total volume of 10 cc, and manually stirred with a spatula 10 mm wide for 10 seconds, to thereby cause expansion. The expansion ratio after 5 minutes from the start of stirring and the density of the foam are shown in Table 3.

### [Comparative Example 2]

The preparation of a first liquid and a second liquid, and the preparation of a foam were performed in a similar manner to Comparative Example 1 except that either the black pigment or the oxidation inhibitor was not used. The expansion ratio after 5 minutes from the start of stirring and the density of the foam are shown in Table 3.

### [Comparative Example 3]

One hundred parts by weight of an epoxy compound [Celloxide 2021P (manufactured by Daicel Corporation), 3',4'-epoxycyclohexylmethyl 3,4-epoxycyclohexanecarboxylate], 10 parts by weight of a dicarbonate diester (B-1) [diethyl dicarbonate: manufactured by FUJIFILM Wako Pure Chemical Corporation], and 2 parts by weight water (C) were added and sufficiently mixed, and thus a first liquid was produced. To 112 parts by weight of this first liquid, 2 parts by weight of a foam stabilizer [TEGOSTAB BF2470: manufactured by Evonik Japan Co Ltd.], and 6 parts by weight of an epoxy curing agent [Ancamine K-54: manufactured by Air Products and Chemicals, Inc.] were added, and the preparation of a foam was performed in a similar manner to Example 1. Expansion occurred immediately after the start of stirring, but the composition that had once expanded shrunk rapidly. This is considered to be due to imbalance of the rate of foaming of the dicarbonate diester and the curing rate of the epoxy compound in the curing system for the epoxy compound.

### [Comparative Example 4]

The preparation of a foam was performed in a similar manner to Comparative Example 3 except that the epoxy compound was changed from Celloxide 2021P to JER828 [bisphenol A type epoxy resin: manufactured by Mitsubishi Chemical Corporation]. The result was that expansion occurred immediately after the start of stirring, but the composition that had once expanded shrunk rapidly, similarly to Comparative Example 3.

**[Table 1]**

| | | | Example | | | | | | | |
|---|---|---|---|---|---|---|---|---|---|---|
| | | | 1 | 2 | 3 | 4 | 5 | 6 | 7 | 8 |
| First liquid | Base resin (A) | Parts by weight | 100 | 100 | 100 | 100 | 100 | 100 | 100 | 100 |
| | | Type | A | A | A | A | A | B | A | C |
| | Dicarbonate diester (B-1) | Parts by weight | 20 | 20 | 10 | 10 | 10 | 10 | 10 | 10 |
| | Carbonate or bicarbonate (B-2) | Type | - | - | - | - | - | - | - | - |
| | | Parts by weight | - | - | - | - | | - | - | - |
| | Oxidation inhibitor | Type | - | - | - | - | - | - | - | - |
| | | Parts by weight | - | - | - | - | - | - | - | - |
| | Carbon black | Parts by weight | - | 4 | 2 | 2 | 2 | - | - | - |
| | Water (C) | Parts by weight | - | - | - | - | - | 2 | 2 | 4 |
| Acidic compound(B-3) | | Parts by weight | - | - | - | - | - | - | - | - |
| Water (C) | | Parts by weight | 4 | 4 | 2 | - | 2 | - | - | - |
| Silanol condensation catalyst (D)*1 | | Type | U220H/ DBU | U220H/ DBU | U220H/ DBU | U220H/ DBU | U200/ DBU | U200/ DABCO | U200/ DABCO | U200/ DABCO |
| | | Parts by weight | 1.6/8 | 1.6/8 | 1.6/8 | 1.6/8 | 1.6/8 | 6/1.2 | 6/4 | 6/4 |
| Foam stabilizer | | Type | BF2470 | BF2470 | BF2470 | BF2470 | BF2470 | BF2470 | BF2470 | BF2470 |
| | | Parts by weight | 2 | 2 | 2 | 2 | 2 | 2 | 2 | 2 |
| Expansion ration (fold) | | | 14 | 13 | 5 | 4 | 8 | 16 | 18 | 18 |
| Density (kilogram per meter cubed, kg/m3) | | | 71 | 77 | 200 | 250 | 125 | 63 | 56 | 56 |

| | | | | | | | | | | |
|---|---|---|---|---|---|---|---|---|---|---|
| *1: Of the silanol condensation catalysts (D), DBU and DABCO act as a foaming aid (E). | | | | | | | | | | |

**[Table 2]**

| | | | Example | | | | | | |
|---|---|---|---|---|---|---|---|---|---|
| | | | 9 | 10 | 11 | 12 | 13 | 14 | 15 |
| First liquid | Base resin (A) | Parts by weight | 100 | 80/ 20 | 80/20 | 80/ 20 | 80/20 | 100 | 100 |
| | | Type | D | A/G | A/G | A/G | A/H | E | F |
| | Dicarbonate diester (B-1) | Parts by weight | 10 | 10 | 10 | 10 | 10 | 10 | 10 |
| | Carbonate or bicarbonate (B-2) | Type | - | - | - | - | - | - | - |
| | | Parts by weight | - | - | - | - | - | - | - |
| | Oxidation inhibitor | Type | - | - | - | - | - | - | - |
| | | Parts by weight | - | - | - | - | - | - | - |
| | Carbon black | Parts by weight | - | - | - | - | - | - | - |
| | Water (C) | Parts by weight | 4 | 4 | 2 | - | 2 | 2 | 2 |
| Acidic compound(B-3) | | Parts by weight | - | - | - | - | - | - | - |
| Water (C) | | Parts by weight | - | - | - | - | - | - | - |
| Silanol condensation catalyst (D)*1 | | Type | U200/ DABCO | U200/ DABCO | U200/ DABCO | U200/ DABCO | U200/ DABCO | U200/ DABCO | U200/ DABCO |
| | | Parts by weight | 6/4 | 6/4 | 6/1.2 | 6/4 | 6/1.2 | 6/1.2 | 6/1.2 |
| Foam stabilizer | | Type | BF2470 | BF2470 | BF2470 | BF2470 | BF2470 | BF2470 | BF2470 |
| | | Parts by weight | 2 | 2 | 2 | 2 | 2 | 2 | 2 |
| Expansion ration (fold) | | | 12 | 18 | 18 | 15 | 20 | 20 | 18 |
| Density (kilogram per meter cubed, kg/m³) | | | 83 | 56 | 56 | 67 | 50 | 50 | 56 |

| | | | | | | | | | |
|---|---|---|---|---|---|---|---|---|---|
| *1: Of the silanol condensation catalysts (D), DBU and DABCO act as a foaming aid (E). | | | | | | | | | |

**[Table 3]**

| | | | Comparative Example 1 | Comparative Example 2 |
|---|---|---|---|---|
| First liquid | Base resin (A) | Parts by weight | 100 | 100 |
| | | Type | A | A |
| | Dicarbonate diester (B-1) | Parts by weight | - | - |
| | Carbonate or bicarbonate (B-2) | Type | Sodium hydrogencarbonate | Sodium hydrogencarbonate |
| | | Parts by weight | 27 | 27 |
| | Oxidation inhibitor | Type | PUR68 | - |
| | | Parts by | 3 | - |
| | | weight | | |
| | Carbon black | Parts by weight | 5 | - |
| Acidic compound(B-3) | | Parts by weight | 37 | 37 |
| Water (C) | | Parts by weight | 12 | 12 |
| Silanol condensation catalyst (D) | | Type | JP-502 | JP-502 |
| | | Parts by weight | 10 | 10 |
| Foam stabilizer | | Type | B8123 | B8123 |
| | | Parts by weight | 2 | 2 |
| Expansion ration (fold) | | | 10 | 10 |
| Density (kilogram per meter cubed, kg/m³) | | | 100 | 100 |

From Tables 1 and 2, it can be seen that when the dicarbonate diester (B-1) is used as the chemical foaming agent (B), a foam can be favorably formed at room temperature without using water (C), or using only a small amount of water (C). On the other hand, as can be seen from Table 3, when sodium hydrogencarbonate or the like is used as the chemical foaming agent (B), a larger amount of water (C) needs to be used as compared with the case where the dicarbonate diester (B-1) is used.

Furthermore, according to Examples 5 to 15, when the resin composition for a foam contains U200, which is dialkyltin dicarboxylate (dibutyltin diacetate) having a high tin content and being a weakly acidic silanol condensation catalyst (D), a foam having a high expansion ratio is likely to be produced.

## Claims

1. A resin composition for a foam comprising a base resin having a reactive silicon group (A), a chemical foaming agent (B), and a silanol condensation catalyst (D), wherein
the chemical foaming agent (B) comprises a dicarbonate diester (B-1) .

2. The resin composition for a foam according to claim 1, wherein the base resin (A) comprises an acrylic resin, and/or a polyoxyalkylene-based polymer.

3. The resin composition for a foam according to claim 1 or 2, wherein the reactive silicon group is a group selected from the group consisting of: a trimethoxysily group; a (methoxymethyl)dimethoxysilyl group; and groups represented by formulas (1) to (3): 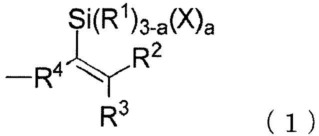 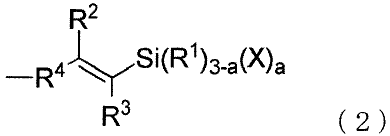 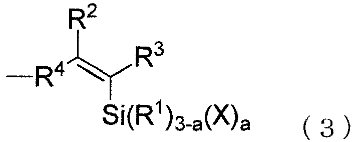 wherein in formulas (1) to (3), R¹ each independently represents a hydrocarbon group having 1 to 20 carbon atoms, wherein the hydrocarbon group represented by R¹ is optionally substituted, and optionally comprises a hetero-containing group; X represents a hydroxy group or a hydrolysable group; a is 1, 2, or 3; R⁴ represents a divalent linking group, wherein the two bonds comprised in R⁴ are each bonded to a carbon atom, an oxygen atom, a nitrogen atom, or a sulfur atom within the linking group; and R² and R³ each independently represent any of a hydrogen atom, an alkyl group having 1 to 20 carbon atoms, an aryl group having 6 to 20 carbon atoms, an aralkyl group having 7 to 20 carbon atoms, or a silyl group;
and a group represented by a formula (4):
-R⁵-CH₂-Si(R¹)₃₋ₐ(X)ₐ (4)
wherein in formula (4), R¹ and a are the same as R¹ and a defined in formulas (1) to (3); and R⁵ represents a heteroatom.

4. The resin composition for a foam according to any one of claims 1 to 3, wherein the silanol condensation catalyst (D) is a neutral or weakly acidic catalyst.

5. The resin composition for a foam according to claim 4, wherein the silanol condensation catalyst (D) comprises a tin-containing catalyst.

6. The resin composition for a foam according to claim 5, wherein the tin-containing catalyst is a neutral or weakly acidic dialkyltin dicarboxylate, and the neutral or weakly acidic dialkyltin dicarboxylate is a compound represented by formula (D1), or an oligomer or polymer comprising a structural unit represented by formula (D2):
(R^{d1}) (R^{d2}) (R^{d3}COO) (R^{d4}COO) Sn··· (D1)
- (-(R^{d1}) (R^{d2}) Sn-OCOR^{d5}COO-) -··· (D2)
wherein in formulas (D1) and (D2), R^{d1} and R^{d2} are identical to or different from each other, and R^{d1} and R^{d2} each represent a linear or branched alkyl group; R^{d3} and R^{d4} each represent an organic group having 1 to 40 carbon atoms; and R^{d5} represents a divalent organic group having 1 to 40 carbon atoms.

7. The resin composition for a foam according to any one of claims 1 to 6, wherein a content of the dicarbonate diester (B-1) is 1 part by weight or more and 50 parts by weight or less with respect to 100 parts by weight of the base resin (A).

8. A foam formed by expanding and curing the resin composition for a foam according to any one of claims 1 to 7.

9. A method for producing a foam, comprising:
a mixing step of mixing a first liquid which comprises a base resin having a reactive silicon group (A) and a dicarbonate diester (B-1) with a silanol condensation catalyst (D) to obtain a mixed liquid,
wherein in the mixed liquid, a rate of foaming effected by decomposition of the dicarbonate diester (B-1), and a rate of curing reaction of the mixed liquid effected by a reaction between the reactive silicon groups are each adjusted such that a foam having an expansion ratio of 2-fold or more and 60-fold or less is obtained.

10. The method for producing a foam according to claim 9, wherein an amount of the dicarbonate diester (B-1) used is 1 part by weight or more and 50 parts by weight or less with respect to 100 parts by weight of the base resin (A), and an amount of the silanol condensation catalyst (D) used is 0.05 parts by weight or more and 20 parts by weight or less with respect to 100 parts by weight of the base resin (A).

11. The method for producing a foam according to claim 9 or 10, wherein the base resin (A) comprises an acrylic resin, and/or a polyoxyalkylene-based polymer.

12. The method for producing a foam according to any one of claims 9 to 11, wherein the reactive silicon group is a group selected from the group consisting of: a trimethoxysilyl group; a (methoxymethyl)dimethoxysilyl group; and groups represented by formulas (1) to (3): 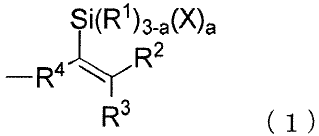 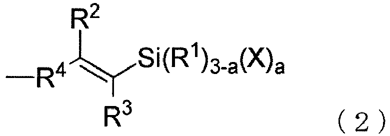 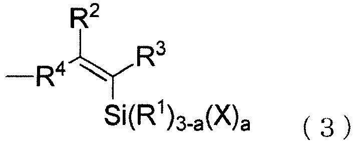 wherein in formulas (1) to (3), R¹ each independently represents a hydrocarbon group having 1 to 20 carbon atoms, wherein the hydrocarbon group represented by R¹ is optionally substituted, and optionally comprises a hetero-containing group; X represents a hydroxy group or a hydrolysable group; a is 1, 2, or 3; R⁴ represents a divalent linking group, wherein the two bonds comprised in R⁴ are each bonded to a carbon atom, an oxygen atom, a nitrogen atom, or a sulfur atom within the linking group; and R² and R³ each independently represent any of a hydrogen atom, an alkyl group having 1 to 20 carbon atoms, an aryl group having 6 to 20 carbon atoms, an aralkyl group having 7 to 20 carbon atoms, or a silyl group;
and a group represented by a formula (4):
-R⁵-CH₂-Si(R¹)₃₋ₐ(X)ₐ (4)
wherein in formula (4), R¹ and a are the same as R¹ and a defined in formulas (1) to (3); and R⁵ represents a heteroatom.

13. The method for producing a foam according to any one of claims 9 to 12, wherein the silanol condensation catalyst (D) is a neutral or weakly acidic catalyst.

14. The method for producing a foam according to claim 13, wherein the silanol condensation catalyst (D) comprises a tin-containing catalyst.

15. The method for producing a foam according to claim 14, wherein the tin-containing catalyst is a neutral or weakly acidic dialkyltin dicarboxylate, and the neutral or weakly acidic dialkyltin dicarboxylate is a compound represented by formula (D1), or an oligomer or polymer comprising a structural unit represented by formula (D2):
(R^{d1}) (R^{d2}) (R^{d3}COO) (R^{d4}COO) Sn ··· (D1)
- (-(R^{d1}) (R^{d2}) Sn-OCOR^{d5}COO-) - ··· (D2)
wherein in formulas (D1) and (D2), R^{d1} and R^{d2} are identical to or different from each other, and R^{d1} and R^{d2} each represent a linear or branched alkyl group; R^{d3} and R^{d4} each represent an organic group having 1 to 40 carbon atoms; and R^{d5} represents a divalent organic group having 1 to 40 carbon atoms.
